(19) Europäisches Patentamt
European Patent Office
Office européen des brevets

(11) EP 0 474 444 B1

(12) **EUROPEAN PATENT SPECIFICATION**

(45) Date of publication and mention of the grant of the patent:
**01.12.1999 Bulletin 1999/48**

(51) Int Cl.$^6$: **H04N 7/30**

(21) Application number: **91307986.9**

(22) Date of filing: **30.08.1991**

(54) **Image processing method and apparatus**

Bildverarbeitungsverfahren und -gerät

Procédé et appareil de traitement d'images

(84) Designated Contracting States:
**DE FR GB**

(30) Priority: **04.09.1990 JP 23498590**
**04.09.1990 JP 23498690**
**05.11.1990 JP 29707390**

(43) Date of publication of application:
**11.03.1992 Bulletin 1992/11**

(60) Divisional application: **99200315.2 / 0 926 883**

(73) Proprietor: **CANON KABUSHIKI KAISHA**
**Tokyo (JP)**

(72) Inventor: **Yamagami, Taku**
**Shimomaruko, Ohta-ku, Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 323 194**
**EP-A- 0 336 317**
**EP-A- 0 380 081**
**DE-A- 3 933 155**
**US-A- 4 774 587**
**US-A- 4 858 028**

- **PATENT ABSTRACTS OF JAPAN, vol. 013, no. 541 (E-854), 5th December 1989; & JP-A-1 221 989 (FUJI PHOTO FILM CO., LTD) 05-09-1989**
- **PATENT ABSTRACTS OF JAPAN, vol. 014, no. 336 (E-0953), 19th July 1990; & JP-A-2 113 684 (FUJI PHOTO FILM CO., LTD) 25-04-1990**
- **PATENT ABSTRACTS OF JAPAN, vol. 013, no. 304 (E-786), 12th July 1989; & JP-A-1 081 583 (TOSHIBA CORP.) 27-03-1989**
- **PATENT ABSTRACTS OF JAPAN, vol. 12, no. 494 (P-805), 23rd December 1988; & JP-A-63 205 644 (MATSUSHITA ELECTRIC IND. CO., LTD) 25-08-1988**
- **PATENT ABSTRACTS OF JAPAN, vol. 14, no. 413 (E-974), 6th September 1990; & JP-A-02 156 789 (FUJI PHOTO FILM CO., LTD) 15-06-1990 (Cat. A)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 474 444 B1

## Description

### BACKGROUND OF THE INVENTION

### Field of the Invention

The present invention relates to a video signal recording apparatus for recording a video signal in such a manner that the video signal is compressed before it is recorded.

### Related Background Art

Hitherto, an Adaptive Discrete Cosine Transform, (hereinafter abbreviated to "ADCT") method, for example, disclosed as in Document 1 (ISO/JTC1/SC2/WG8N800) has been known as an image compression method. According to the above-described method, a function is realized which is capable of, regardless of the image content, compressing an image signal into a predetermined amount of encoded data by a repetition process in which plural trial and error operations are performed. Then, the adjustment function thus-realized will now be described.

According to the above-described method, the amount of data is, as disclosed in Document 1, converged by using a Newton Raphson Method or a method disclosed in Document 2 ("Method of Controlling Code Amount in DCT Coding", 1989, Autumn National Conference of the Electronic Information Society, p.p.45, Exposition No. D45, Pre-Exposition Theses, disclosed by a group including Nemoto). Furthermore, the data amount has been desired to be converged at furthermore high speed. For example, according to Document 2, two or three repetitions will cause an effect to be obtained in that the data amount can be compressed to a desired ratio while revealing an effect of reduction ratio of errors which is smaller than ± 5%.

According to the ADCT method, the compression ratio (that is, the amount of encoded data) can be controlled by using parameter F for quantizing image data. Figs. 3A and 3B illustrate the relationship between quantization parameter F and amounts of encoded data. As shown in Fig. 3, the compression ratio is a monotone decrease function of F. Figs. 3A and 3B illustrate the relationship between F of various images and compression ratios. As can be seen from Figs. 3A and 3B, although the relationship between F and the compression ratio depends upon the content of the image, the compression ratio necessarily becomes a monotone decrease function. Therefore, by performing plural times of trial and error operations while adjusting F, image data can be converged to a desired compression ratio (amount of encoded data).

As hardware capable of, at high speed, performing DCT operation required to transform the frequency in accordance with the above-described ADCT method, A121 manufactured by INMOS or the like has been available. The IC employed in A121 is capable of executing the DCT operation for one frame at about 30 milisec. Assuming that operations (for example, zigzag scanning and Huffman coding) except for the DCT can be subjected to a parallel process, it takes 30 milisec or longer time to perform one trial-and-error operation (that is, the compression ratio is obtained by performing the compression while giving F of a certain value). In a case where an image taken by the CCD of an electronic still camera is compressed by the ADCT method before it is recorded to a magnetic disk, a time about 40 milisec is actually required because the time to perform recording to the magnetic disk is furthermore taken.

EP-A-0380081 describes an encoding system in which, after orthogonal transformation and normalisation of a video signal, a predictive adaptive quantisation is carried out. The output from the adaptive quantiser is encoded by an entropy encoder using a variable length code coding system such as Huffman coding. The amount of output code data is controlled by adjusting the quantising step size used by the adaptive quantiser so that the amount of output data per preset period, for example one frame period, is fixed at an approximately constant amount.

JP-A-60100875 describes apparatus for the transmission of a still image or picture in which the image data is subjected to variable length code differential pulse code modulation and the variable length codes then converted to fixed length, for example 8 bit, codes before transmission. In particular, JP-A-60-100875 provides a circuit which enables variable-length bit data to be converted to fixed bit length data and then sent immediately to the transmission circuit. The variable-length coding circuit is an encoding circuit which allocates short length codes to frequently occurring patterns and longer length codes to rarely occurring patterns. The variable-length codes are then each converted into 8-bit codes and sent to the transmission circuit.

JP-A-02-156789 describes a picture signal compression coding device in which bits are added to variable length code Huffman code to produce fixed length codes.

EP-A-0323194 describes an electronic camera in which a mode switch is provided to enable selection of one of a number of different modes each of which compresses an input image into a different, but fixed amount of digital data.

On the other hand, if the amount of encoded data may be changed depending upon the image in a case where the ADCT method is employed, a method may be employed which is arranged in such a manner that the conversion of the data amount by the repetition process is not performed but the compression is performed while fixing F.

In this case, recording of about 25 images per second can be enabled. As a result, satisfactory continuous photographing performance for an electronic still camera can be realized. However, a problem arises in that the number of images recordable in a memory having a certain capacity becomes indefinite because the amount of encoded data undesirably becomes variable length.

In order to record a predetermined number of images, the amount of encoded data must be converged by plural times of repetition operations as described above. Assuming that three times of trial-and-error operations must be performed to converge the amount of encoded data, only about 8 images can be recorded in one second because a time of about 120 milisec is taken. Therefore, satisfactory continuous photographing performance for an electronic still camera cannot be realized as yet.

It is an object of the present invention to provide an image processing apparatus which can enable efficient encoding of image data so as to make effective use of memory capacity.

According to one aspect of the present invention, there is provided an image processing apparatus in accordance with claim 1.

In another aspect, the present invention provides a method of processing an image in accordance with claim 11.

An embodiment of the present invention provides a compressing method suitable for a still image recording apparatus.

An embodiment of the present invention enables a coding parameter coding to be accurately determined.

An embodiment of the present invention enables a coding parameter to be determined at high speed.

Embodiments of the present invention will now be described, by way of example, with reference to the accompanying drawings, in which:

Fig. 1 is a flow chart which illustrates the operation of a first embodiment of the present invention;
Fig. 2 is a block diagram which illustrates the first embodiment of the present invention;
Figs. 3A and 3B respectively illustrate the relationship between parameter F and the amounts of compression encoded data;
Fig. 4 illustrates the structure of a compression encoding portion 5;
Figs. 5A and 5B respectively are flow charts which illustrate a third embodiment of the present invention;
Fig. 6 is a flow chart which illustrates the operation of a fifth embodiment of the present invention;
Fig. 7 illustrates step 3 shown in Fig. 6;
Figs. 8A and 8B illustrate the conditions when $\tilde{F}$ is converged at high speed;
Figs. 9A and 9B illustrate conditions when $\tilde{F}$ is not converged;
Figs. 10A and 10B illustrate the relationship between parameter F and the amount of encoded data;
Figs. 11A and 11B are flow charts which illustrate the operation of a sixth embodiment of the present invention; and
Fig. 12 is a block diagram which illustrates the structure of the sixth embodiment of the present invention.

## DETAILED DESCRIPTION OF THE PREFERRED EMBODIMENTS

[First Embodiment]

A digital camera according to the present invention is constituted as follows: a repetition process for converging the amount of encoded data is usually performed in a single photographing mode so as to perform so-called fixed length coding (hereinafter abbreviated to "FLC") while controlling the amount of encoded data. In a case where a user has selected a mode in which a plurality of image pictures are continuously recorded in response to a single depression of a button, the above-described repetition operation is not performed at the time of the photographing operation, but so-called variable length coding (hereinafter abbreviated to "VLC") in which the value of quantization parameter F is fixed is performed. As a result, the time taken to perform the coding process can be shortened for the purpose of increasing the number of images which can be continuously taken in a unit time. Furthermore, at the moment at which the above-described continuous photographing operation has been completed, the image recorded in accordance with VLC is temporarily decoded is again encoded in accordance with FLC so that a predetermined number of images which can be recorded on a recording medium having the same is secured.

Fig. 2 illustrates an embodiment of the present invention, where portions of the camera which are not related to the present invention, for example, the diaphragm, the shutter and the like are omitted. Referring to Fig. 2, an optical image received by a lens 1 is converted into a video electric signal by an image pickup device 2, for example, a CCD (Charge Coupled Device). The image pickup device 2 registers charges, which correspond to the optical images of the subject and reads the video signal in response to a control signal supplied from a control unit 7.

The video signal thus-read is converted into a digital signal by an A/D converter 3. A video signal processing means is disposed between the image pickup device 2 and the A/D converter 3 although omitted from illustration so

that the γ-correction process, the formation and separation of the color signal, the white balance process, the conversion into Y-dicolor difference are performed.

The video signal converted into the digital signal is registered in an image memory 4.

An encode device 5 encodes image data read out from the image memory 4 in accordance with the above-described ADCT method so as to transmit the image data to a record device 6. The encode device 5 further possesses a function of counting the code data quantity and a function of decoding single encoded data. The counted amount of encoded data can be read out by a control unit 7.

The control unit 7 unifies the functions of the apparatus and controls the functions of the overall system. That is, the control unit 7 controls a sequential operations of the corresponding units such as the image pickup operation, registration and compression of data and recording medium recording. The control unit 7 further performs the file administration. An MMif 9 is an man-machine interface including a monitor for displaying the available quantity of the memory, the number of the recorded images, the number of the recordable images and the like, a release button and a variable operation selection member or the like.

Then, the structure of the encode device 5 will now be described with reference to Fig. 4.

Referring to Fig. 4, reference numeral 51 represents a DCT/IDCT unit for performing discrete cosine transform and inverse discrete cosine transform operations. Reference numeral 52 represents a quantization/inverse quantization unit for performing the quantization and the inverse quantization of data in accordance with a quantization parameter set by a quantization table 55. Reference numeral 53 represents a Huffman encode/decode unit for performing encoding/decoding in accordance with a parameter supplied from a Huffman table 56.

Reference numeral 54 represents a parameter setting register for registering data transmitted from the control unit 7 for the purpose of changing the quantization parameter stored in the quantization table 55, the data thus-registered being then transmitted by the parameter setting register 54 to a multiplier 58. Reference numeral 57 represents a counter for counting the amount of encoded data transmitted from the Huffman encode/decode unit 53. The control unit 7 calculates data to be set for the parameter setting register 54 in accordance with the count value made by the counter 57.

The above-described units described with reference to Fig. 4 are controlled by the control unit 7. At the time of the encode operation, video data transmitted from the image memory 4 is discrete-cosine-converted by the DCT/IDCT 51, quantized by the quantization/inverse quantization unit 52 and Huffman-encoded by the Huffman encode/decode unit 53 before it is stored in the record device 6. Furthermore, in order to again perform encoding, encoded data stored in the record unit 6 is subjected to Huffman decoding, the inverse-quantization and the inverse DCT in the inverse sequential order to the above-described processes so that obtained image data is stored in the image memory 4.

In a case where an ordinary record mode has been instructed by an operator through a mode switch provided in an operation unit (omitted from illustration), the control unit 7 performs recording by the following procedure.

When the release button is depressed, the control portion performs focusing and operates the diaphragm and the shutter so as to expose the image pickup device 2. As a result, image information is fetched by the image memory 4. The control unit 7 transmits the quantization parameter F to the encode device 5 so that image data stored in the image memory 4 is compressed and as well as the amount of encoded data is counted. At this time, the encode device 5 does not transmit code data but the same counts the amount of encoded data for one frame.

The above-described operations are performed while changing F until a desired amount of encoded data can be obtained so that a plurality of trial-and-error operations are performed.

At the time when F (hereinafter designated by symbol "Fa"), which enables a desired amount of encoded data to be generated, is obtained, the control unit 7 again supplies the parameter Fa to the encode device 5 and as well as instructs the record device 6 to transmit code data. The control unit 7 instructs the record device 6 to receive/record the code data.

As a result of the above-described operations, compression codes, which have been subjected to fixed length coding is recorded to the recording medium (for example, in IC card, a magnetic disk, an optomagnetic disk or the like) of the record device 6.

In a case where a user instructs a continuous recording mode through the mode switch provided in the operation unit, the control unit 7 performs the recording operation as follows:

The operations from the moment at which the image pickup device 2 is exposed to light to the moment at which image information is fetched by the image memory 4 are the same as those to be performed in the ordinary recording mode. In the encoding process in this mode, fixed length coding of the amount of encoded data by means of the repetition process is not performed, but the encoding and recording are performed while fixing the value of F to a default value. That is, the control unit 7 supplies parameter F to the encode device 5 and as well as instructs the record device 6 to transmit code data. Furthermore, the control unit 7 instructs the record device 6 to receive the code data and to perform recording.

A relatively small value is selected as the value of the quantization parameter F at this time in order to prevent the image quality deterioration due to the compression (quantization).

As a result of the above-described operations, the variable length and compressed code is recorded to the record device. The recording process thus-arranged is continued in a period in which the release button is being depressed.

After the continuous photographing processes have been sequentially completed, all of code data items, which have been subjected to the variable length coding, are read out from the recording medium included in the record device 6. Then, the code data is decoded to pre-encoding image information by the encode device 5 before it is stored in the image memory 4.

Similarly to the encoding process, the above-described operations are controlled by the control unit 7. Information stored in the image memory 4 is compressed and recorded by the above-described ordinary process, that is, fixed length coding in which the repetition process is utilized.

A schematic flow chart of the above-described embodiment is shown in Fig. 1.

Referring to Fig. 1, the fact that the release button is depressed is waited for in step S1. When it is depressed, exposure and memory writing are performed in step S2.

If it is, in step S3, determined that the continuous photographing mode has not been set, the FLC of image data on the image memory is performed and recording is performed in step S5.

If the continuous photographing mode has been set, the VLC of image data on the image memory is performed and recording is performed in step S4. If the release button is being depressed in step S6, the flow returns to step S2.

In a case where the release button is not depressed in step S6, that is, the continuous photographing has been completed, the flow proceeds to step S7 in which whether or not the image recorded by the VLC exists on the recording medium is examined. If it does not exist, the flow returns to the initial stage. If it exists, the flow proceeds to step S8 in which code data is read out from the recording medium before it is decoded so as to be stored in the image memory 4. In step S9, the code data decoded in step S8 and recorded on the image recording medium is deleted. In step S10, the image data in the image memory is subjected to the FLC before it is recorded. Then, the flow returns to step S7.

[Second Embodiment]

According to the above-described embodiment, in a case where an image, which has been subjected to the variable length coding process, exists, it is automatically searched and decoded to be again encoded by the FLC. The above-described operation may be commenced by a user by using a switch. That is, a structure may be employed which is arranged in such a manner that the flow is able to enter the sequence of step S7 when a user switches on a switch which enables the variable length code arrangement to be performed.

According to the above-described embodiment, the first compression means for performing the variable length compression and a second compression means for performing the fixed length compression use the common circuit. Furthermore, a distinction is made between the case where the quantization parameter is fixed and the case where the length is made to be variable so as to make it a fixed length by trial and error. In addition, predetermined parameters are set by the control unit 7 so that the first and the second compression means are provided with their functions. However, the compression means may possess individual circuit structures.

Furthermore, the compression means and the elongation means may be arranged in such a manner that they are formed into individual systems.

After recording has been completed by the above-described method, data may be displayed on a monitor by an image reproducing device having a means for decoding the code data or a hard copy of it may be obtained by a copying device.

The recording medium may be a magnetic disk or the like which employs the magnetic recording method, an optical disk or the like which employs the optical recording method, a semiconductor memory such as an IC card, a ROM and a RAM, or a recording medium capable of recording image data.

Furthermore, the quantization step for preventing the deterioration in the image may be omitted at the time of the VLC in the continuous photographing mode.

The compression algorithm is not limited to the above-described JPEG method. For example, the arithmetic encoding method, the run length encoding method, the Huffman encoding method and a facsimile encoding method such as the MH, MR and MMR may be employed. That is, any encoding method may be employed if it is a method which is capable of performing both of the fixed length compression and the variable length compression by changing the quantization parameter or the encoding parameter at the time of the encoding operation.

As described above, according to the present invention, an image signal can efficiently be encoded. In particular, since recording can be performed at high speed while securing a satisfactorily large number of recording images, an image processing apparatus capable of performing compression encoding, which can be preferably adapted to, for example, the continuous photographing mode, can be provided.

[Third Embodiment]

According to this embodiment, there is provided a recording method utilizing the advantages of the two compression methods, that is, the above-described VLC and FLC and capable of recording a satisfactory number of images per recording medium while preventing the image quality deterioration.

According to this embodiment, an image is basically first recorded by the VLC. A sufficiently small value of F is selected in order to prevent the image quality deterioration. At a moment at which the total amount of encoded data of a plurality of images recorded by the VLC reaches a predetermined quantity, the images are decoded if the number of the images has not reached a number which must be realized with the above-described total amount of encoded data. Then, the image is again encoded by the FLC in order to make the total amount of encoded data to be smaller than the amount of encoded data which enables the number of the images to be recorded.

At this time, the amount of encoded data is not equally allocated to all of the images, but the amount of encoded data to be allocated is determined in proportion to the amount of encoded data at the time of the first encoding by the VLC. For example, it is considered that an image having a large amount of encoded data realized by the VLC has a large number of information items about the image. Therefore, the image is again encoded with a relatively large amount of encoded data.

According to the above-described recording method, the amount of encoded data can be allocated while arranging satisfactory balance for the contents of the subject image. Furthermore, a desired number of the recordable images on the recording medium can be reliably realized.

The above-described process will further specifically be described.

Prior to making the description, an assumption is made that a digital still camera having a magnetic disk as a recording medium the total recordable capacity of which is 2 Mbytes is used. Another assumption is made that 20 images can be recorded per magnetic disk, where the average allocated amount of encoded data per image is 100 Kbytes.

For example, in a case where a plurality of images are recorded by the VLC and 20 or more images can be recorded at the moment at which the total record capacity exceeds 1900 Kbytes, the number of images which must be recorded can be realized while maintaining the image quality. Therefore, there is no problem in this case. Therefore, an assumption is made that 19 or less images have been recorded. For example, a case in which 10 images have been recorded will be described. In this case, FLC is performed to again encode the image so as to make the total amount of encoded data for the 10 images to be 10 x 100 kbytes (= 1 Mbyte).

An assumption is made that the amount of encoded data of each image at the time when they are encoded by the VLC is VLCvolume (i), where symbol i denotes the number of the image recorded.

The total amount of encoded data VLCsum for an image encoded by the VLC can be expressed by the following Equation (1):

$$\text{VLCsum} = \sum_{i=1}^{10} \text{VLCvolume (i)} \qquad \ldots(1)$$

An assumption is made that the amount of encoded data required to again encoding image i is FLCvolume (i), where FLCvolume (i) is given by allocating VLCsum by the ratio of VLCvolumne (i). FLCvolume (i) at this time can be given from the following Equation (2):

$$\text{FLCvolume (i)} = \frac{\text{VLCvolume (i)}}{\text{VLCsum}} \times 100 \text{ Kbytes} \times 10 \qquad (2)$$

Since VLCsum is necessarily larger than 100 Kbytes x 10, FLCvolumne (i) is, from Equation (2), necessarily smaller than VLCvolume. Therefore, by deleting data on the recording medium after the VLC code has been decoded, the decoded code can be recorded to the recording medium.

When all of the 10 images have been again encoded by the FLC, the total amount of encoded data for 10 images is 1 Mbytes. Therefore, the blank capacity on the magnetic disk is 1 Mbyte. The image which has been subjected to the re-encoding process is not again subjected to the re-encoding. That is, the similar recording process is performed in such a manner that the 10 images can be recorded by using the residual 1 Mbyte. That is, the re-encoding is performed by the FLC in such a manner that the total amount of encoded data of the magnetic disk at the time when the i-th (i > 10) image is recorded by the VLC is larger than 1900 Kbytes and as well as the total amount of encoded data

for (i - 10) novel images recorded by the VLC when i is smaller than 19 is (i - 10) * 100 Kbytes.

The block structure of the image signal recording apparatus according to this embodiment is the same as that shown in Fig. 2.

Usually, the control unit 7 performs recording by the VLC in accordance with the following sequential order:

When the release button is depressed, the control unit 7 performs focusing and operates the diaphragm, the shutter and the like so as to expose the image pickup device 2 so that image information is fetched into the image memory 4. The control unit 7 transmits quantization parameter F to the encode device 5 and as well as instructs the record device 6 to transmit code data. The control unit 7 further instructs the record device 6 to receive code data and to perform recording.

As a result, code data of a variable length can be recorded to the record device 6.

When the amount of encoded data of the image encoded by the VLC exceeds a predetermined value, all of the variable length code is read out by the record device 6 from the recording medium before decoded into image information by the encode device 5 so as to be registered into the image memory 4. Similarly to the encoding operation, the above-described process is performed under control performed by the control unit 7. The amount of encoded data to be allocated to each image is calculated by the control unit 7 so that encoding and recording are performed by the FLC in such a manner that the amount of encoded data becomes the amount of encoded data thus-calculated.

The control unit 7 performs recording by the FLC

The control unit 7 supplies parameter F to the encode device 5 so as to cause image data stored in the image memory 4 to be compressed. Furthermore, the code amount is counted. At this time, the encode device 5 does not transmit code data but the same counts the amount of encoded data for one frame.

The above-described operations are performed while changing F until a desired amount of encoded data can be obtained so that a plurality of trial-and-error operations are performed.

At the time when F (hereinafter designated by symbol "Fa"), which enables a desired amount of encoded data to be generated, is obtained, the control unit 7 again supplies the parameter Fa to the encode device 5 and as well as instructs the record device 6 to transmit code data. The control unit 7 instructs the record device 6 to receive/record the code data.

The compressed code having a fixed-length for each image as a result of the above-described process is recorded on the recording medium of the record device 6.

The structure of the encoding device 5 is the same as that shown in Fig. 4.

A specific flow chart of the above-described embodiment is shown in Figs. 5A and 5B. Referring to Figs. 5A and 5B, symbols i, j, iv0, VLCsum, VLCvolume ( ), FLCvolume ( ) and AlocArea are variables and imax, MA and AV are constants. Symbol i denotes the number of the image given in accordance with the photographing order and symbol iv0 denotes the first number of the image recorded by the VLC. Symbol VLCsum denotes the total amount of encoded data of the image which has been recorded by the VLC and the code length of which has not been adjusted. Symbol VLCvolume (i) denotes the code length of the i-th image realized due to the VLC, arrangement FLCvolume (i) denotes a desired code length for use to adjust the amount of encoded data of the i-th image and AlocArea denotes a blank capacity for temporarily recording a plurality of images to be recorded on the recording medium by the VLC. Symbol AV denotes an average allocated length per image. Therefore, the number imax of the recordable images per recording medium can be given by MA/AV.

In step S20, the variable is initialized. That is, assumptions are made that i = 0, iv0 = 1 and VLCsum = 0. AlocArea is obtained by subtracting average data amount AV from total recordable capacity MA. That is, a marginal capacity of about one image is provided. The number imax of the recordable images per recording medium is obtained by dividing total recordable capacity MA by average data amount AV.

In step S21, a fact that the release button is depressed is waited for. When the release button is depressed, exposure is performed and writing to the image memory 4 are performed in step S22.

In step S23, image in the image memory 4 is formed into a VLC code before it is written to the recording medium. The recorded amount of encoded data at this time is stored in VLCvolume (i).

In step S24, it is determined whether or not all of code data items could be recorded on the recording medium. If all of the code data items could be recorded as described above, the flow proceeds to step S25. The case where the same could not be recorded is an exceptional case where the amount exceeds the blank capacity the size of which is average data amount and which exists on the recording medium. In this case, the number of images recorded and a predetermined number of images are subjected to a comparison in step S35. If the number of the recorded images exceeds the predetermined number, recording on the above-described recording medium is completed here. If the number of the recorded images has not reached the predetermined number, the flow proceeds to step S36 in which FLC recording in a blank region on the recording medium is performed. The recorded amount of encoded data at this time is stored in VLCvolume (i) before the flow proceeds to step S25.

In step S25, i and VLCsum are updated in such a manner that i = i - 1, VLCsum = VLCsum + VLCvolume (i + 1).

In step S26, whether or not the predetermined number of images has been recorded is determined. If the

predetermined number of image has not been recorded (i ≦ imax), there is no necessity of adjusting the amount of encoded data. Therefore, the flow returns to step S21 in which the fact that the release button is depressed is waited for. If the predetermined number of images has been recorded (i > imax), the flow proceeds to step S27.

In step S27, it is discriminated whether or not VLCsum exceeds allocated capacity AlocArea for the variable length code. If it does not exceed, the flow returns to step S21. If it exceeds AlocArea, the flow process to step S28.

In a loop defined by steps S28 to S32, images iv0 to i are re-encoded for the purpose of adjusting the amount of encoded data.

In step S29, the amount of encoded data to be allocated to image j is obtained by the following equation:

$$\mathrm{FLCvolume\ (j)} = \frac{\mathrm{VLCvolume\ (j)}}{\mathrm{VLCsum}} * \mathrm{AverageVolume} * (\mathrm{i} - \mathrm{iv0} + 1) \qquad (3)$$

According to Equation (3), the amount of encoded data in proportion to VLCvolume ( ) is allocated similarly to Equation (2). Referring to Equation (3), term (i - iv0 + 1) denotes the number of images which have not been subjected to the adjustment of the amount of encoded data. Therefore, by multiplying AverageValue, the total amount of encoded data to be allocated to (j - iv0 + 1) images can be expressed.

In step S30, image j is decoded in the image memory.

In step S31, codes on the medium are deleted before FLC recording of images in the image memory is performed.

Since re-encoding of the (i - iv0 + 1) images has been completed in a loop defined by steps S28 to S32, variables iv0, VLCsum and AlocArea are updated in step S34. Then, the flow returns to step S21.

[Fourth Embodiment]

According to the above-described embodiments, the amount of encoded data is allocated by the amount of encoded data in proportion to the degree of VLCvolume (i). The present invention is not limited to this. For example, a structure may be employed which is arranged in such a manner that an image the degree of VLCvolume (i) of which is smaller than AverageValue is not re-encoded. In this case, the images except for the above-described image are re-encoded so as to adjust the amount of encoded data. It might be feasible to employ another structure which is arranged in such a manner that images having VLCvolume (i), which is larger than a certain amount x of encoded data, are assumed that they have a amount of encoded data of x and a proportional allocation is performed. The above-described idea utilizes a fact that a complex image exceeding a certain degree does not encounter an excessive deterioration even if it is compressed.

Although the apparatus automatically enters the re-encoding sequence according to the above-described embodiments, another structure may be employed which is arranged in such a manner that an alarm for a user is displayed if VLCsum > AlocArea in step S27 so as to cause the user to adjust the amount of encoded data or change the recording medium because the capacity is too small. Furthermore, if the user instructs the adjustment of the amount of encoded data to be performed, the flow proceeds to the sequence ensuing the step S28.

Although the above-described embodiments are arranged in such a manner that the amount of encoded data is adjusted when the amount of variable length encoded data becomes a predetermined quantity, another structure may be employed which is arranged in such a manner that the amount of encoded data is adjusted when the number of images encoded by VLC becomes a predetermined number. For example, the amount of encoded data may be adjusted by re-encoding in units of 5 images performed for each 5 images.

Any of the above-described cases is arranged in such a manner that, in a case where the amount of encoded data is automatically adjusted, the continuous photographing operation is stopped if the adjustment of the amount of encoded data is commenced during the continuous photographing operation. Therefore, another structure may be employed which is arranged in such a manner that the adjustment of the amount of encoded data is not commenced during the continuous photographing but the same is adjusted after the continuous photographing operation has been completed.

According to the above-described embodiment, the first compression means for performing the variable length compression and a second compression means for performing the fixed length compression use the common circuit. Furthermore, a distinction is made between the case where the quantization parameter is fixed and the case where the length is made to be variable so as to make it a fixed length by trial and error. In addition, predetermined parameters are set by the control unit 7 so that the first and the second compression means are provided with their functions. However, the compression means may possess individual circuit structures.

Furthermore, the compression means and the elongation means may be arranged in such a manner that they are formed into individual systems.

After recording has been completed by the above-described method, data may be displayed on a monitor by

an image reproducing device having a means for decoding the code data or a hard copy of it may be obtained by a copying device.

The recording medium may be a magnetic disk or the like which employs the magnetic recording method, an optical disk or the like which employs the optical recording method, a semiconductor memory such as an IC card, a ROM and a RAM, or a recording medium capable of recording image data.

The compression algorithm is not limited to the above-described JPEG method. For example, the arithmetic encoding method, the run length encoding method, the Huffman encoding method and a facscimile encoding method such as the MH, MR and MMR may be employed. That is, any encoding method may be employed if it is a method which is capable of performing both of the fixed length compression and the variable length compression by changing the quantization parameter or the encoding parameter at the time of the encoding operation.

As described above, according to the above-described embodiments of the present invention, the amount of encoded data can be allocated to adapt to the image while enabling a predetermined number of images to be recorded. Therefore, excessive deterioration in the image quality can be prevented. Furthermore, since the VLC is performed in usual, the compression speed can be raised in comparison to the FLC. Therefore, an effect can be obtained in that a larger number of images can be photographed in the continuous photographing mode of the camera.

According to the present invention, the deterioration in the image quality can be prevented and thereby the image can be compressed efficiently.

[Fifth Embodiment]

The block diagram which illustrates the "electric still camera" according to this embodiment is arranged similarly to that shown in Fig. 2.

When a user depresses a release button (omitted from illustration), the control unit 7 performs focusing and operates the diaphragm and the shutter so as to expose the image pickup device 2. As a result, image information is fetched by the image memory 4. The control unit 7 transmits quantization parameter F to the encode device 5 so that image data stored in the image memory 4 is compressed and as well as the amount of encoded data is counted. At this time, the encode device 5 does not transmit code data to the record device 6, but the same counts only the amount of encoded data for one frame.

Trial and error of the above-described operation is repeated a plurality of times while changing parameter F until the amount of encoded data becomes a desired (a predetermined) amount of encoded data.

When F (hereinafter called " $\tilde{F}$ ") which enables a desired amount of encoded data to be generated is obtained, the control unit again supplies parameter $\tilde{F}$ to the encode device 5 so that the compression operation is commenced. The control unit 7 instructs the record device 6 to record code data.

As a result of the above-described process, code data formed into the fixed length in frame unit is recorded by the record device 6.

In a case where the user instructs the continuous photographing mode by using the mode switch, the control unit 7 performs recording in accordance with the following sequence:

At the time of recording the first image, the fixed length compression is performed in the same sequential order as that performed at the time of the above-described ordinary recording mode so that recording is performed. The fixed-length compression of the amount of encoded data by the repetition process is not performed from the second and ensuing images, but compression and recording are performed by using the value $\tilde{F}$ used at the time of recording the first image. That is, after the image is supplied to the memory 4, the control unit 7 supplies $\tilde{F}$ to the encode device 5 and as well as instructs the record device 6 to transmit encode data so that the compression operation is performed. Simultaneously, the control unit 7 instructs the record device 6 to record code data.

It is predicted that the correlation of the images to be continuously photographed is strong. Therefore, by using, as the parameter from the second and ensuing images, parameter $\tilde{F}$, with which the first image has been fixed-length compressed, it is expected that the amount of compression encoded data from the second and the ensuing images approximates the amount of compression encoded data of the first image. Thus, recording can be performed with the amount of compression encoded data, which approximates a desired amount of encoded data, within a predetermined time period while exhibiting a significantly large number of images in comparison to the case where only the fixed length compression is performed.

A specific flow chart of the above-described embodiment is shown in Fig. 6.

Referring to Fig. 6, a fact that the release button is depressed is waited for in step S101. If it is depressed, exposure of the image pickup device 2 and image writing to the memory 4 are performed in step S102. In step S103, parameter $\tilde{F}$ which gives a desired amount of compression encoded data is obtained. In step S104, compression is performed by using $\tilde{F}$ obtained in step S103 so as to record it to the recording medium of the record device 6.

If the continuous photographing mode is not set in step S105, the recording operation is completed here. If the same is set, the flow proceeds to step S106 in which a discrimination is made whether or not the release button

has been depressed. If the same has not been depressed, the recording operation is completed here. If the same has been depressed, the flow proceeds to step S107 in which exposure of the image pickup device 2 and image signal writing to the memory 4 are performed. In step S108, the image signal is compressed by using $\tilde{F}$ obtained in step S103 so as to record it on the recording medium of the record device 6 before the flow returns to step S105. As described above, in the processes ensuing the step S105, the operation of obtaining parameter $\tilde{F}$ (fixed-length compression), which generates a desired amount of encoded data by the repetition process, is not performed.

Then, the operations to be performed in step S103 shown in Fig. 6 will now be described.

As described in Document 1, the amount of compression encoded data is a monotone decrease function of parameter F while holding the relationship which is allowed to approximate by the following equation:

$$\text{Log Bit} = \text{Log F} + \text{B} \qquad (1)$$

Referring to Equation (1), term "Bit" denotes the amount of compression encoded data and A and B are constants respectively depending upon the image. Assuming that amounts Bit1 and Bit2 of compression encoded data with respect to two certain parameters $F_1$ and $F_2$ are experimentally obtained, estimated values $\hat{A}$ and $\hat{B}$ of constants A and B are obtained from Equation (1);

$$\hat{A} = \frac{\text{Log Bit1} - \text{Log Bit2}}{\text{Log } F_1 - \text{Log } F_2} \qquad (2)$$

$$\hat{B} = \text{Log Bit2} - \hat{A}\,\text{Log } F_2 \qquad (3)$$

From Equations (1), (2) and (3), parameter $\tilde{F}$ which generates a desired code quantity $\tilde{Bit}$ it is estimated from the following equation:

$$\tilde{F} = 10^{\frac{1}{\hat{A}} \text{Log} (\tilde{Bit}) - \hat{B}} \qquad ...(4)$$

In step S103 shown in Fig. 6, Equations (2), (3) and (4) are repeatedly used to converge $\tilde{F}$. A flow chart of the above-described process is shown in Fig. 7. The above-described process is able to be adapted to the first to the fourth embodiments.

Referring to Fig. 7, variable iteration denotes the times of the repetition processes performed and terms $f_0$, $f_1$ and $f_2$ respectively denote the value of parameter F at the present trial, the value at the previous trial and the value at the trail two time before. Terms $b_0$, $b_1$ and $b_2$ respectively denote the amounts of encoded data when parameter F is $f_0$, $f_1$ and $f_2$.

Then, the flow of the above-described process will now be described. In step S201, the variable is initialized. In step S202, compression is performed while making the value of parameter F to be fo so that encoded data amount bo is obtained. In step S203, iteration is increased by only 1. In step S204, the value of $\hat{A}$ is set to - 2/3 at the first repetition process. At the second repetition process, the flow proceeds to step S207 in which the estimated value of $\hat{A}$ is calculated by using Equation (2). At the third and ensuing process, an examination of the relationship is, in step'S212, made between amounts $b_0$ and $b_1$ of compression encoded data at the present and the previous trials and desired encoded data amount $\tilde{Bit}$. A fact is known from the experience that it is preferable that the relationship between $f_0$, $f_1$ and $\tilde{f}$ holds conditions shown in Figs. 8A and 8B in order to complete the conversion in a furthermore short time. If the next estimated value of f is obtained under conditions shown in Figs. 9A and 9B in which the above-described conditions shown in step S212 are not met, the conversion cannot sometimes be made. The reason for this lies in that Equation (1) is a simple approximation. Accordingly, if the conditional equation shown in step S212 is not met, the flow proceeds to step S213 in which data of the two times before is made to be fi and bi in step S213 before the estimated value of $\hat{A}$ is obtained in step S207.

In step S208, $\hat{B}$ is obtained by using Equation (3) before trial value $f_0$ of the next F is obtained in step S210.

In step S211, the present trial value $f_0$ and the previous trial value $f_1$ are subjected to a comparison. If they

coincide with each other, a discrimination is made that the conversion has taken place and thereby the value of $\tilde{F}$ is made to be $f_0$. If they do not coincide with each other, the flow returns to step S202.

According to the above-described embodiment, the first image of the continuous mode is subjected to the fixed length compression so as to obtain parameter $\tilde{F}$ which give a desired code quantity. The second and ensuing images are subjected to the variable length compression by using the value of $\tilde{F}$ thus-obtained. However, the present invention is not limited to this.

According to the above-described embodiment, an excessively long time takes to record the first image. Accordingly, another structure may be employed which is arranged in such a manner that parameter F of the first image is set to a predetermined value and the variable length encoding is performed while omitting the repetition process. In this case, the value F is determined experientially.

According to the above-described embodiment, the variable length mode compression is necessarily performed in the continuous photographing mode. Another structure may be employed which is arranged in such a manner that the fixed length compression and the variable length compression are switched over in accordance with the continuous photographing speed because the fixed length compression can be performed in the continuous photographing operation of a speed of about 10 frames/sec.

In a case where the variable length compression is performed as described above, the amount of encoded data becomes different depending upon the image. Therefore, a predetermined number of images recordable on the recording medium cannot be reliably recorded. For example, a problem will takes place in that recording cannot be performed although the shutter has been depressed. In this case, a countermeasure is taken such that the fact that the blank capacity is insufficient is informed to a user to cause the recording medium to be changed. Then, the change of the recording medium is waited for before recording on the changed recording medium is performed.

According to the above-described embodiment, the fixed length compression and the variable length compression are automatically switched over in the continuous photographing mode. However, another structure may be employed which is arranged in such a manner that the fixed length compression and the variable length compression are manually switched over by a user regardless of the instructed mode, the ordinary mode or the continuous photographing mode. In this case, it might be feasible to employ specifications arranged in such a manner that the continuous photographing speed, which can be set in a case where the fixed length compression is selected, is 10 frames/sec and the continuous photographing speed, which can be set in a case where the variable length compression is selected, is 30 frames/sec.

Although the ADCT is employed as the compression method according to the above-described embodiment, the present invention is not limited to the ADCT method. The present invention can be adapted to an electronic still camera having two compression encoding means which are respectively capable of the variable length compression and the fixed length compression.

As described above, according to the present invention, an apparatus having a compression encoding unit which can be suitably adapted to the continuous photographing mode can be provided.

According to the embodiments claimed in claims 1, 2 and 3, the maximum number of images which can be photographed at the continuous photographing mode can be significantly increased in comparison to a structure in which only the fixed length compression is performed.

[Sixth Embodiment]

Fig. 12 is a block diagram which illustrates the structure of a sixth embodiment of the present invention.

The blocks having the same functions as those shown in Fig. 2 are given the same reference numerals. Referring to Fig. 12, reference numeral 10 represents an actuator unit for moving a lens 1 in a focusing direction in response to a focus control signal transmitted from the control unit 7. Reference numeral 11 represents a diaphragm and shutter unit for controlling the diaphragm and the shutter speed in accordance with a diaphragm value and the shutter speed transmitted from the control unit 7. Reference numeral 12 represents a range circuit for measuring the distance between the lens 1 and a subject (omitted from illustration). Reference numeral 13 represents a photometry circuit for measuring the brightness of the subject (omitted from illustration).

The control unit 7 generates the focus control signal in accordance with the distance measured by the range circuit 13, the control unit 7 further generating a signal denoting the diaphragm value and the shutter speed in accordance with the brightness measured by the photometry circuit 13.

Then, the control operation performed by the control unit 7 will now be described with reference to flow charts shown in Figs. 11A and 11B.

In step S301, when the release button is depressed half, a discrimination is made that the first switch is switched on. Accordingly, the flow proceeds to step S302. A state of waiting is realized until the release button is depressed half. In step S302, the control unit 7 performs the focus control and the exposure control such as the diaphragm and the shutter speed controls in accordance with data supplied from the range circuit 12 and the photometry

circuit 13.

In step S303, parameter $\tilde{F}$ for the quantization is obtained under conditions the focusing position, the diaphragm and the shutter speed set in accordance with the subject. That is, the parameter $\tilde{F}$ is obtained such that a desired code quantity is realized by the above-describe repetition process.

In step S304, when the release button is fully depressed, a discrimination is made that the second switch is switched on so that the flow proceeds to step S305. The waiting state is realized until the release button is fully depressed.

In step S305, exposure to a CCD is performed so that image data is written to the image memory 4.

In step S306, the encode device 5 performs the FLC (Fixed Length Coding) by using parameter $\tilde{F}$ obtained in step S303 so as to write code data to the recording medium of the record device 6.

In step S307, it is determined whether or not the release button is continuously being depressed. If the release button is being depressed, a discrimination is made that the present mode is the continuous photographing mode. Therefore, the flow proceeds to step S308.

In step S308, focusing and exposure controlling for the next image are performed and as well as the CCD is exposed to light so that image data is written to the image memory 4.

In step S309, image data stored in the image memory 4 is encoded by using parameter $\tilde{F}$ obtained in step S303. In a case where the image has been changed from the previous image, it is considered that the code data quantity will be changed if the same parameter $\tilde{F}$ as that for the previous image is used. Accordingly, VLC (Variable Length Coding) is basically performed in step S309.

In step S310, it is discriminated whether or not the number of images to be continuously photographed is larger than number n of the images, which can be stored in the image memory 4 and the record device 6. If it is larger than n, the flow proceeds to step S311 in which a fact of memory overflow is displayed on a display of an MMif9 before the flow proceeds to step S312. In a case where $i \leqq n$, the flow proceeds to step S307 so as to continue the continuous photographing operation.

If the release button has not been depressed in step S307, the flow proceeds to step S312 in which a discrimination is made whether or not the VLC image exists on the recording medium. If it does not exist, the flow returns to step S301. If it exists as described above, the VLC image is decoded in step S313, the decoded image data being then stored in the image memory 4. In step S314, code data on the recording medium, which has been decoded in step S314, is deleted. In step S315, the FLC is performed so that code data is written to the recording medium. The above-described operation is the same as that performed according to the first embodiment.

As described above, according to this embodiment, the continuous photographing operation is performed in such a manner that the coding of the variable length is performed by making the quantization parameter for the second and ensuing images to be the same as that for the first image. Therefore, the process of determining the parameter can be omitted so that high speed continuous-photographing can be performed.

Furthermore, the quantization parameter is determined after the focus control and the exposure control have been performed. Therefore, a parameter which is suitable for the actual subject can be determined.

In addition, the VLC image is converted into the FLC image after the number of images have been continuously photographed. Therefore, the quantity of code data to be recorded on the recording medium can easily be controlled.

Although the description of the above-described embodiment is made with reference to an electronic still camera, a similar control can be performed in the other type apparatus.

For example, in a case where image data is subjected to the variable length encoding and the same is again decoded and printed after the same has been temporarily stored in a memory, the quantization parameter may be obtained after processing conditions such as the exposure quantity and the like have been determined by pre-scanning.

The present invention is not limited to the FLC (Fixed Length Coding) which is used in the above-described embodiment and which is precisely controlled to a predetermined code quantity. A predetermined quantity of error is permitted.

## Claims

1. An image processing apparatus comprising:

   input means (2, 3, 4) for inputting image data representing an image;
   coding means (51-56) for encoding image data input by the input means, thereby generating encoded image data representing the image; and
   control means (57, 7) for controlling the amount of encoded image data used to represent an image by varying a quantization parameter of the coding means, characterised by mode selection means (9) for selecting either a first single image mode in which a single image is to be processed or a second continuous image mode in

which a plurality of images are to be processed in succession and by said control means (57, 7) being arranged to control said coding means (51-56) to cause said coding means to encode the image data representing the single image by varying the quantization parameter until a desired amount of encoded image data is obtained when the first mode is selected by the mode selection means and to control said coding means (51-56) to cause a fixed common quantization parameter to be used for coding the image data representing each of the plurality of images when the second mode is selected by the mode selection means.

**2.** An apparatus according to claim 1, further comprising means (51 to 56) for decoding a variable amount of encoded data produced using said fixed common quantization parameter and for encoding it into a fixed amount of encoded data by varying the quantization parameter.

**3.** An apparatus according to claim 2, wherein said decoding and encoding means (51 to 56) is operable to decode said variable amount of encoded data produced using said fixed common quantization parameter when said variable amount of encoded data exceeds a predetermined amount (VLCsum>AlocArea in Fig. 5A).

**4.** An apparatus according to claim 2 or 3, wherein said decoding and encoding means (51 to 56) is operable to decode said data produced using said fixed common quantization parameter in said second continuous image mode after all of said plurality of images have been successively input by the input means.

**5.** An apparatus according to any one of claims 1 to 4, wherein means (9) are provided for enabling manual switching between encoding by varying said quantization parameter and encoding using said fixed quantization parameter, regardless of whether a single image or a plurality of images are input by said input means (2).

**6.** An apparatus according to claim 5, wherein means (9) are provided for adjusting the speed at which images are input depending upon which mode is activated by said manual switching means (9).

**7.** An apparatus according to any one of the preceding claims, wherein said coding means (51 to 56) are arranged to perform an orthogonal transform conversion on data input thereto.

**8.** Apparatus according to any one of the preceding claims, wherein said control means (57, 7) is arranged to fix said fixed common quantization parameter by determining the quantization parameter required to convert data representing a first one of said plurality of images into a predetermined fixed amount of encoded data.

**9.** An electronic still camera comprising an image processing apparatus in accordance with any one of claims 1 to 8.

**10.** An electronic still camera according to claim 9 when dependent on claim 8, wherein means (5, 7) are provided for determining said quantization parameter during focusing of the camera.

**11.** A method of processing an image comprising:

encoding image data using coding means (51-56) to generate encoded image data representing the image; and controlling the amount of encoded image data used to represent an image by varying a quantization parameter of the coding means, characterised by selecting using mode selection means (9) either a first single image mode in which a single image is to be processed or a second continuous image mode in which a plurality of images are to be processed in succession and controlling the amount of encoded image data by encoding the image data representing the single image by varying the quantization parameter until a desired amount of encoded image data is obtained when the first mode is selected and by using a fixed common quantization parameter to code the image data representing each of the plurality of images when the second mode is selected.

**12.** A method according to claim 11, further comprising decoding a variable amount of encoded data produced using said fixed common quantization parameter and then encoding it to produce a predetermined fixed amount of encoded data by varying the quantization parameter.

**13.** A method according to claim 12, which comprises decoding said variable amount of encoded data produced using said fixed common quantization parameter when said variable amount of encoded data exceeds a predetermined fixed amount of encoded data (VLCsum>AlocArea in Fig. 5A).

**14.** A method according to claim 12 or 13, which comprises decoding said data produced using said fixed common quantization parameter in said second continuous image mode after all of said plurality of images have been successively input.

**15.** A method according to any one of claims 11 to 14, which comprises switching, in response to a manual switchover by a user using manual switching means, between converting input image data into said fixed amount of encoded data by varying said quantization parameter and converting input image data into said variable amount of encoded data using said fixed common quantization parameter.

**16.** A method according to claim 15, which comprises adjusting the speed at which successive ones of a plurality of images are input depending upon which mode is activated by said manual switching means.

**17.** A method according to any one of claims 11 to 16, which comprises performing orthogonal transform conversion on input image data during encoding.

**18.** A method according to any one of claims 11 to 17, which comprises using as said fixed common quantization parameter, the quantization parameter required to convert data representing a first one of said plurality of images into a predetermined fixed amount of encoded data.

**Patentansprüche**

**1.** Bildverarbeitungsvorrichtung, umfassend:

eine Eingabeeinrichtung (2, 3, 4) zum Eingeben von Bilddaten, die ein Bild repräsentieren;
eine Codiereinrichtung (51-56) zum Codieren von durch die Eingabeeinrichtung eingegebenen Bilddaten, wodurch das Bild repräsentierende codierte Bilddaten erzeugt werden; und
eine Steuereinrichtung (57, 7) zum Steuern der Menge codierter Bilddaten, die zum Repräsentieren eines Bilds durch Ändern eines Quantisierungsparameters der Codiereinrichtung verwendet werden,

**gekennzeichnet durch**

eine Betriebsart-Auswahleinrichtung (9) zum Auswählen entweder einer ersten Einzelbildbetriebsart, in der ein Einzelbild zu verarbeiten ist, oder einer zweiten kontinuierlichen Bildbetriebsart, in der eine Vielzahl von Bildern in Aufeinanderfolge zu verarbeiten sind, und dadurch, daß
die Steuereinrichtung (57, 7) derart angeordnet ist, daß die Codiereinrichtung (51-56) so gesteuert wird, daß die Codiereinrichtung veranlaßt wird, die Bilddaten zu codieren, die das Einzelbild repräsentieren, durch Ändern des Quantisierungsparameters, bis eine gewünschte Menge codierter Bilddaten erhalten ist, wenn die erste Betriebsart durch die Betriebsart-Auswahleinrichtung ausgewählt ist, und die Codiereinrichtung (51-56) so gesteuert wird, daß ein fester gemeinsamer Quantisierungsparameter zu verwenden ist zum Codieren der Bilddaten, die jedes der Vielzahl von Bildern repräsentieren, wenn die zweite Betriebsart durch die Betriebsart-Auswahleinrichtung ausgewählt ist.

**2.** Vorrichtung nach Anspruch 1, ferner umfassend eine Einrichtung (51 bis 56) zum Decodieren einer veränderlichen Menge codierter Daten, die unter Verwendung des festen gemeinsamen Quantisierungsparameters erzeugt wurden, und zum Codieren derselben in eine feste Menge codierter Daten durch Ändern des Quantisierungsparameters.

**3.** Vorrichtung nach Anspruch 2, bei der die Decodier- und Codiereinrichtung (51 bis 56) betreibbar ist zum Decodieren der veränderlichen Menge codierter Daten, die unter Verwendung des festen gemeinsamen Quantisierungsparameters erzeugt wurde, wenn die veränderliche Menge codierter Daten eine vorbestimmte Menge (VLcsum>AlocArea in Fig. 5A) überschreitet.

**4.** Vorrichtung nach Anspruch 2 oder 3, bei der die Decodier- und Codiereinrichtung (51 bis 56) betreibbar ist zum Decodieren der Daten, die unter Verwendung des festen gemeinsamen Quantisierungsparameters in der zweiten kontinuierlichen Bildbetriebsart erzeugt wurden, nachdem sämtliche der Vielzahl von Bildern aufeinanderfolgend durch die Eingabeeinrichtung eingegeben wurden.

5. Vorrichtung nach einem der Ansprüche 1 bis 4, bei der eine Einrichtung (9) bereitgestellt ist zum Ermöglichen einer manuellen Umschaltung zwischen Codieren durch Ändern des Quantisierungsparameters und Codiern unter Verwendung des festen Quantisierungsparameters unabhängig davon, ob ein Einzelbild oder eine Vielzahl von Bildern durch die Eingabeeinrichtung (2) zugeführt werden.

6. Vorrichtung nach Anspruch 5, bei der eine Einrichtung (9) bereitgestellt ist zum Einstellen der Geschwindigkeit, mit der Bilder zugeführt werden, in Abhängigkeit davon, welche Betriebsart durch die manuelle Schalteinrichtung (9) aktiviert ist.

7. Vorrichtung nach einem der vorangehenden Ansprüche, bei der die Codiereinrichtung (51 bis 56) angeordnet ist zum Durchführen einer orthogonalen Transformationsumwandlung für dieser zugeführten Daten.

8. Vorrichtung nach einem der vorangehenden Ansprüche, bei der die Steuereinrichtung (57, 7) angeordnet ist zum Festlegen des festen gemeinsamen Quantisierungsparameters durch Ermitteln des Quantisierungsparameters, der erforderlich ist zum Umwandeln von Daten, die ein erstes der Vielzahl von Bildern repräsentieren, in eine vorbestimmte feste Menge codierter Daten.

9. Elektronische Stehbild-Kamera, umfassend eine Bildverarbeitungsvorrichtung in Übereinstimmung mit einem der Ansprüche 1 bis 8.

10. Elektronische Stehbild-Kamera nach Anspruch 9, wenn abhängig von Anspruch 8, bei der eine Einrichtung (5, 7) bereitgestellt ist zum Ermitteln des Quantisierungsparameters während Scharfeinstellens der Kamera.

11. Verfahren zum Verarbeiten eines Bilds, umfassend:

Codieren von Bilddaten unter Verwendung einer Codiereinrichtung (51-56) zum Erzeugen von das Bild repräsentierenden codierten Bilddaten; und
Steuern der Menge codierter Bilddaten, die zum Repräsentieren eines Bilds verwendet werden, durch Ändern eines Quantisierungsparameters der Codiereinrichtung,

**gekennzeichnet durch**
Auswählen, unter Verwendung einer Betriebsart-Auswahleinrichtung (9), entweder einer ersten Einzelbildbetriebsart, in der ein Einzelbild zu verarbeiten ist, oder einer zweiten kontinuierlichen Bildbetriebsart, in der eine Vielzahl von Bildern in Aufeinanderfolge zu verarbeiten sind, und Steuern der Menge codierter Bilddaten durch Codieren der Bilddaten, die das Einzelbild repräsentieren, durch Ändern des Quantisierungsparameters, bis eine gewünschte Menge codierter Bilddaten erhalten ist, wenn die erste Betriebsart ausgewählt ist, und unter Verwendung eines festen gemeinsamen Quantisierungsparameters zum Codieren der Bilddaten, die jedes der Vielzahl von Bildern repräsentieren, wenn die zweite Betriebsart ausgewählt ist.

12. Verfahren nach Anspruch 11, ferner umfassend Decodieren einer veränderlichen Menge codierter Daten, die unter Verwendung des festen gemeinsamen Quantisierungsparameters erzeugt wurden, und dann Codieren derselben, um eine vorbestimmte feste Menge codierter Daten durch Ändern des Quantisierungsparameters zu erzeugen.

13. Verfahren nach Anspruch 12, welches Decodieren der veränderlichen Menge codierter Daten umfaßt, die unter Verwendung des festen gemeinsamen Quantisierungsparameters erzeugt wurden, wenn die veränderliche Menge codierter Daten über eine vorbestimmte feste Menge codierter Daten (VLcsum>AlocArea in Fig. 5A) hinausgeht.

14. Verfahren nach Anspruch 12 oder 13, welches Decodieren der Daten umfaßt, die unter Verwendung des festen gemeinsamen Quantisierungsparameters in der zweiten kontinuierlichen Bildbetriebsart erzeugt wurden, nachdem sämtliche der Vielzahl von Bildern aufeinanderfolgend zugeführt wurden.

15. Verfahren nach einem der Ansprüche 11 bis 14, welches Umschalten, in Antwort auf eine manuelle Umschaltung durch einen eine manuelle Umschalteinrichtung verwendenden Benutzer, zwischen Umwandeln eingegebener Bilddaten in die feste Menge codierter Daten durch Ändern des Quantisierungsparameters und Umwandeln eingegebener Bilddaten in die veränderliche Menge codierter Daten unter Verwendung des festen gemeinsamen Quantisierungsparameters umfaßt.

16. Verfahren nach Anspruch 15, welches Einstellen der Geschwindigkeit umfaßt, mit der aufeinanderfolgende einer

Vielzahl von Bildern eingegeben werden, in Abhängigkeit davon, welche Betriebsart durch die manuelle Umschalteinrichtung aktiviert ist.

**17.** Verfahren nach einem der Ansprüche 11 bis 16, welches Durchführen einer orthogonalen Transformationsumwandlung für eingegebene Bilddaten während der Codierung umfaßt.

**18.** Verfahren nach einem der Ansprüche 11 bis 17, welches Verwenden, als den festen gemeinsamen Quantisierungsparameter, des Quantisierungsparameters umfaßt, der erforderlich ist, Daten, die ein erstes der Vielzahl von Bildern repräsentieren, in eine vorbestimmte feste Menge codierter Daten umzuwandeln.

**Revendications**

**1.** Appareil de traitement d'image, comprenant :

un moyen (2, 3, 4) d'entrée pour l'introduction de données d'image représentant une image ;
un moyen (51 - 56) de codage pour coder des données d'image introduites par le moyen d'entrée, afin de générer des données d'image codées représentant l'image ; et
un moyen (57, 7) de commande pour commander la quantité de données d'image codées utilisées pour représenter une image en faisant varier un paramètre de quantification du moyen de codage, caractérisé par un moyen (9) de sélection de mode pour sélectionner, soit un premier mode à image unique dans lequel une seule image doit être traitée, soit un deuxième mode à image en continu dans lequel une pluralité d'images doivent être traitées en succession et par le fait que ledit moyen (57, 7) de commande est agencé pour commander ledit moyen (51 - 56) de codage, pour conduire ledit moyen de codage à coder les données d'image représentant l'image unique en faisant varier le paramètre de quantification jusqu'à ce qu'une quantité souhaitée de données d'image codées soit obtenue lorsque le premier mode est sélectionné par le moyen de sélection de mode et pour commander ledit moyen (51 - 56) de codage, pour conduire un paramètre de quantification commun fixe à être utilisé pour coder les données d'image représentant chacune de la pluralité d'images lorsque le deuxième mode est sélectionné par le moyen de sélection de mode.

**2.** Appareil selon la revendication 1, comprenant en outre un moyen (51 à 56) pour décoder une quantité variable de données codées produites en utilisant ledit paramètre de quantification commun fixe et pour les coder en une quantité fixe de données codées en faisant varier le paramètre de quantification.

**3.** Appareil selon la revendication 2, dans lequel ledit moyen (51 à 56) de décodage et de codage peut être actionné pour décoder ladite quantité variable de données codées produites en utilisant ledit paramètre de quantification commun fixe lorsque ladite quantité variable de données codées excède une quantité prédéterminée (VLCsum > AlocArea sur la figure 5A).

**4.** Appareil selon la revendication 2 ou 3, dans lequel ledit moyen (51 à 56) de décodage et de codage peut être actionné pour décoder lesdites données produites en utilisant ledit paramètre de quantification commun fixe dans ledit deuxième mode à image en continu après que la totalité de ladite pluralité d'images ont été introduites successivement par le moyen d'entrée.

**5.** Appareil selon l'une quelconque des revendications 1 à 4, dans lequel des moyens (9) sont utilisés pour permettre une commutation manuelle entre un codage en faisant varier ledit paramètre de quantification et un codage en utilisant ledit paramètre de quantification fixe, qu'il s'agisse d'une image unique ou d'une pluralité d'images qui sont introduites par ledit moyen (2) d'entrée.

**6.** Appareil selon la revendication 5, dans lequel des moyens (9) sont utilisés pour régler la vitesse à laquelle des images sont introduites en fonction du mode qui est activé par lesdits moyens (9) de commutation manuelle.

**7.** Appareil selon l'une quelconque des revendications précédentes, dans lequel lesdits moyens (51 à 56) de codage sont agencés pour effectuer une conversion à transformation orthogonale sur des données qui sont introduites dans ceux-ci.

**8.** Appareil selon l'une quelconque des revendications précédentes, dans lequel ledit moyen (57, 7) de commande est agencé pour fixer ledit paramètre de quantification commun fixe en déterminant le paramètre de quantification

requis pour convertir des données représentant une première de ladite pluralité d'images en une quantité fixe prédéterminée de données codées.

9. Caméra électronique à image fixe comprenant un appareil de traitement d'image selon l'une quelconque des revendications 1 à 8.

10. Caméra électronique à image fixe selon la revendication 9 lorsqu'elle dépend de la revendication 8, dans lequel des moyens (5, 7) sont utilisés pour déterminer ledit paramètre de quantification au cours de la mise au point de la caméra.

11. Procédé de traitement d'une image, comprenant :

le codage de données d'image en utilisant un moyen (51 - 56) de codage pour générer des données d'image codées représentant l'image ; et

la commande de la quantité de données d'image codées utilisées pour représenter une image en faisant varier un paramètre de quantification du moyen de codage, caractérisé par une sélection utilisant un moyen (9) de sélection de mode, soit d'un premier mode à image unique dans lequel une seule image doit être traitée, soit d'un deuxième mode à image en continu dans lequel une pluralité d'images doivent être traitées en succession et une commande de la quantité de données d'image codées par codage des données d'image représentant l'image unique en faisant varier le paramètre de quantification jusqu'à ce qu'une quantité souhaitée de données d'image codées soit obtenue lorsque le premier mode est sélectionné et en utilisant un paramètre de quantification commun fixe pour coder les données d'image représentant chacune de la pluralité d'images lorsque le deuxième mode est sélectionné.

12. Procédé selon la revendication 11, comprenant en outre le décodage d'une quantité variable de données codées produites en utilisant ledit paramètre de quantification commun fixe, puis le codage de celles-ci pour produire une quantité fixe prédéterminée de données codées en faisant varier le paramètre de quantification.

13. Procédé selon la revendication 12, comprenant le décodage de ladite quantité variable de données codées produites en utilisant ledit paramètre de quantification commun fixe lorsque ladite quantité variable de données codées excède une quantité fixe prédéterminée de données codées (VLCsum > AlocArea sur la figure 5A).

14. Procédé selon la revendication 12 ou 13, comprenant le décodage desdites données produites en utilisant ledit paramètre de quantification commun fixe dans ledit deuxième mode à image en continu après que la totalité de ladite pluralité d'images a été introduite de manière successive.

15. Procédé selon l'une quelconque des revendications 11 à 14, comprenant la commutation, en réponse à une commutation manuelle par un utilisateur en utilisant un moyen de commutation manuel, entre une conversion de données d'image d'entrée en ladite quantité fixe de données codées en faisant varier ledit paramètre de quantification et une conversion de données d'image d'entrée en ladite quantité variable de données codées en utilisant ledit paramètre de quantification commun fixe.

16. Procédé selon la revendication 15, comprenant le réglage de la vitesse à laquelle des images successives d'une pluralité d'images sont introduites en fonction du mode qui est activé par ledit moyen de commutation manuel.

17. Procédé selon l'une quelconque des revendications 11 à 16, comprenant l'exécution d'une conversion à transformation orthogonale sur des données d'image d'entrée au cours d'un codage.

18. Procédé selon l'une quelconque des revendications 11 à 17, comprenant l'utilisation, en tant que paramètre de quantification commun fixe, du paramètre de quantification requis pour convertir des données représentant une première de ladite pluralité d'images en une quantité fixe prédéterminée de données codées.

FIG. 1

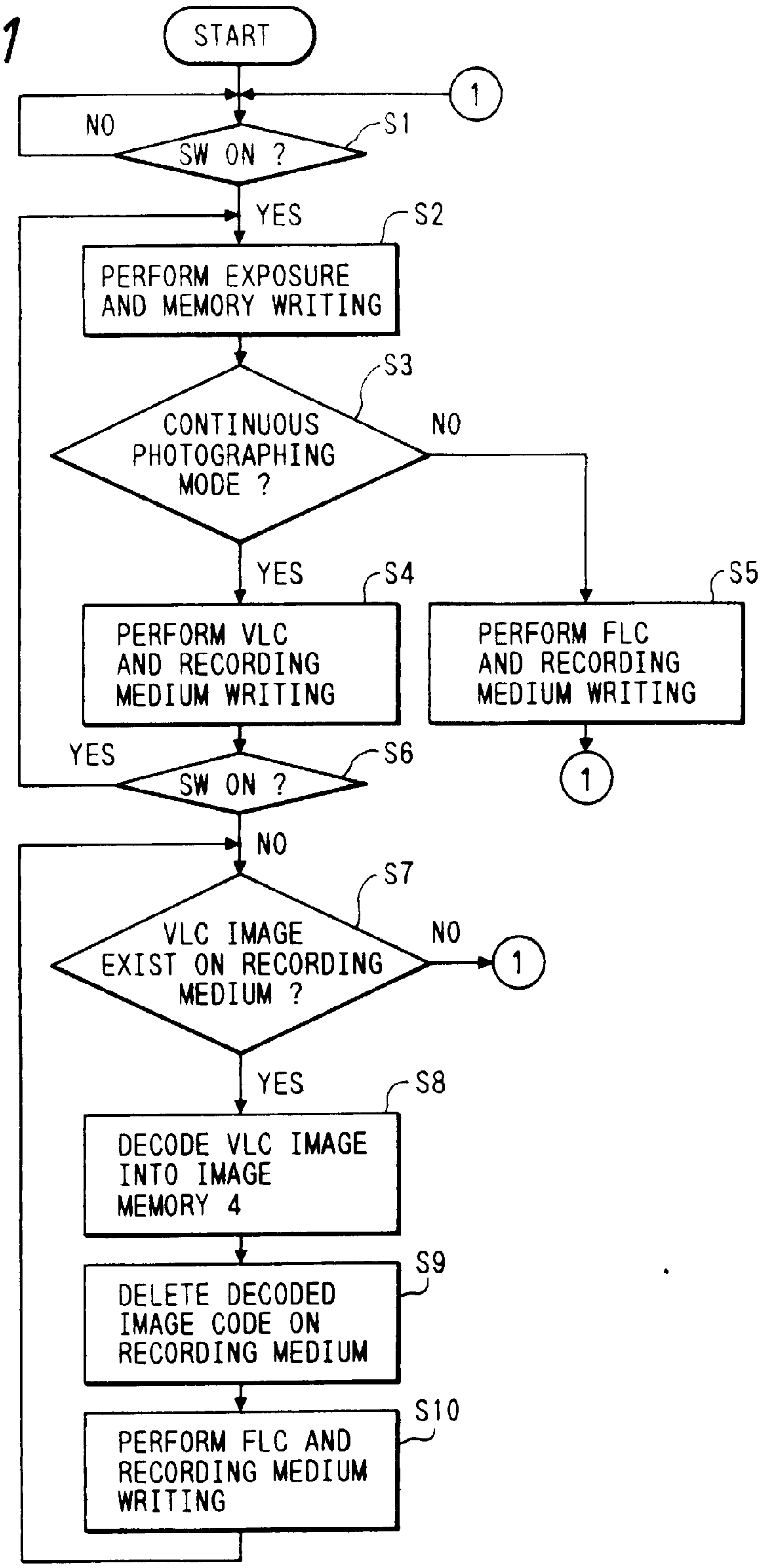
START
1
NO
SW ON ?
S1
YES
S2
PERFORM EXPOSURE AND MEMORY WRITING
S3
CONTINUOUS PHOTOGRAPHING MODE ?
NO
YES
S4
S5
PERFORM VLC AND RECORDING MEDIUM WRITING
PERFORM FLC AND RECORDING MEDIUM WRITING
YES
SW ON ?
S6
1
NO
S7
VLC IMAGE EXIST ON RECORDING MEDIUM ?
NO
1
YES
S8
DECODE VLC IMAGE INTO IMAGE MEMORY 4
S9
DELETE DECODED IMAGE CODE ON RECORDING MEDIUM
S10
PERFORM FLC AND RECORDING MEDIUM WRITING

FIG. 2

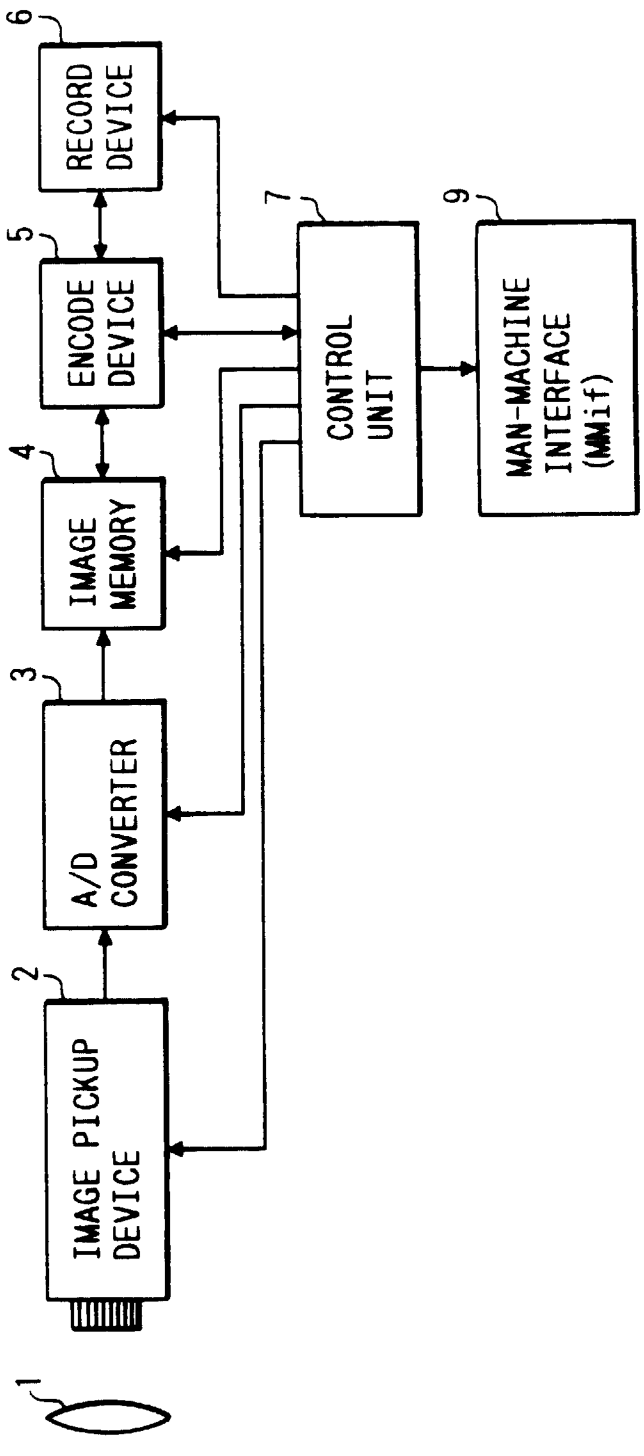
1
2
IMAGE PICKUP DEVICE
3
A/D CONVERTER
4
IMAGE MEMORY
5
ENCODE DEVICE
6
RECORD DEVICE
7
CONTROL UNIT
9
MAN-MACHINE INTERFACE (MMif)

FIG. 3A

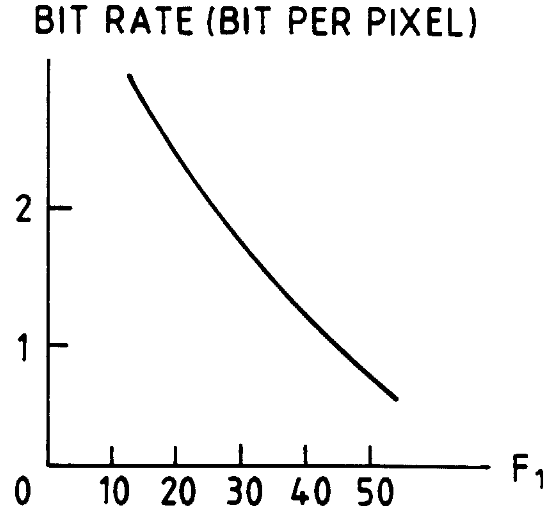
BIT RATE (BIT PER PIXEL)
2
1
0
10 20 30 40 50
$F_1$

FIG. 3B

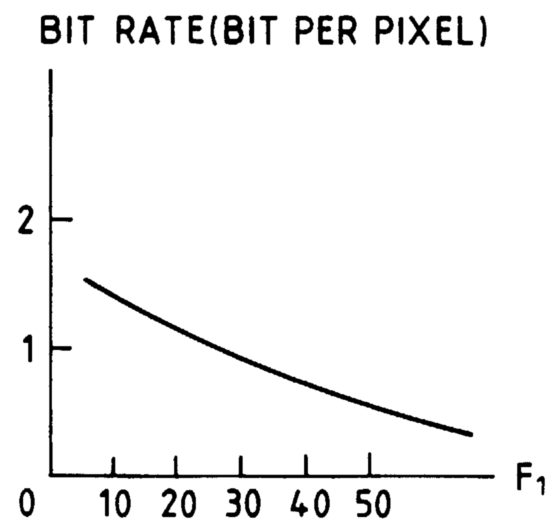
BIT RATE(BIT PER PIXEL)
2
1
0
10 20 30 40 50
$F_1$

FIG. 4

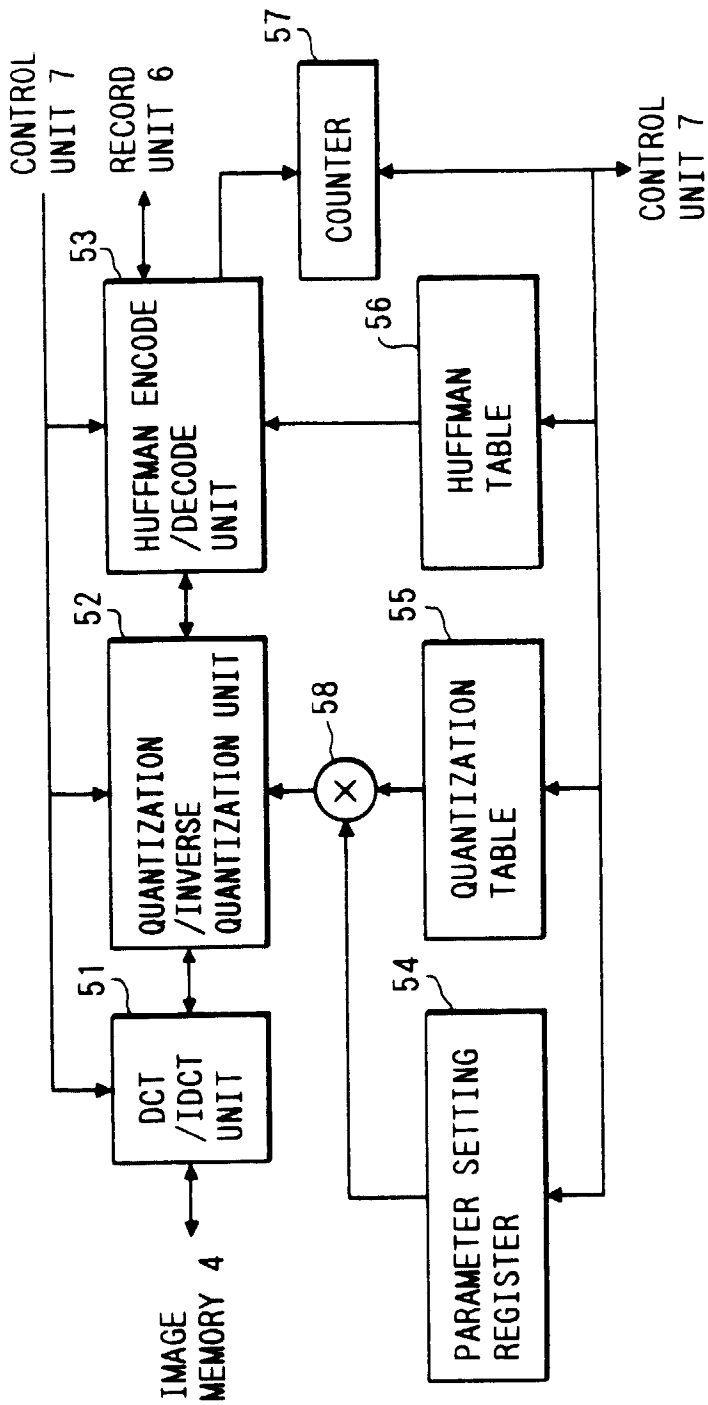
CONTROL UNIT 7
RECORD UNIT 6
57
COUNTER
CONTROL UNIT 7
53
HUFFMAN ENCODE /DECODE UNIT
56
HUFFMAN TABLE
52
QUANTIZATION /INVERSE QUANTIZATION UNIT
58
55
QUANTIZATION TABLE
51
DCT /IDCT UNIT
54
PARAMETER SETTING REGISTER
IMAGE MEMORY 4

FIG. 5A

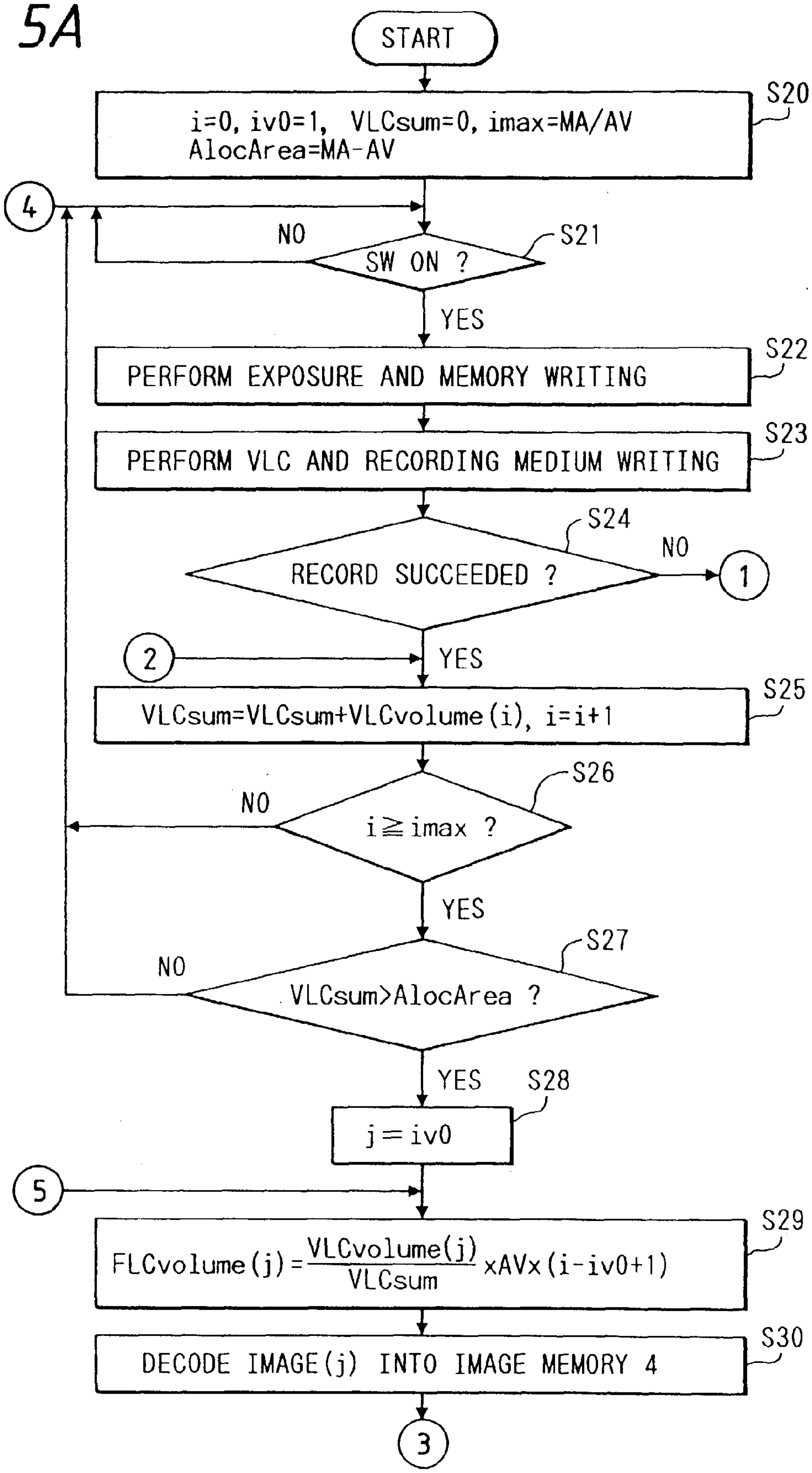
START
S20
i=0, iv0=1, VLCsum=0, imax=MA/AV
AlocArea=MA-AV
4
NO
S21
SW ON ?
YES
S22
PERFORM EXPOSURE AND MEMORY WRITING
S23
PERFORM VLC AND RECORDING MEDIUM WRITING
S24
NO
RECORD SUCCEEDED ?
1
2
YES
S25
VLCsum=VLCsum+VLCvolume(i), i=i+1
S26
NO
i≧imax ?
YES
S27
NO
VLCsum>AlocArea ?
YES
S28
j=iv0
5
S29
FLCvolume(j)=VLCvolume(j)/VLCsum xAVx(i-iv0+1)
S30
DECODE IMAGE(j) INTO IMAGE MEMORY 4
3

FIG. 5B

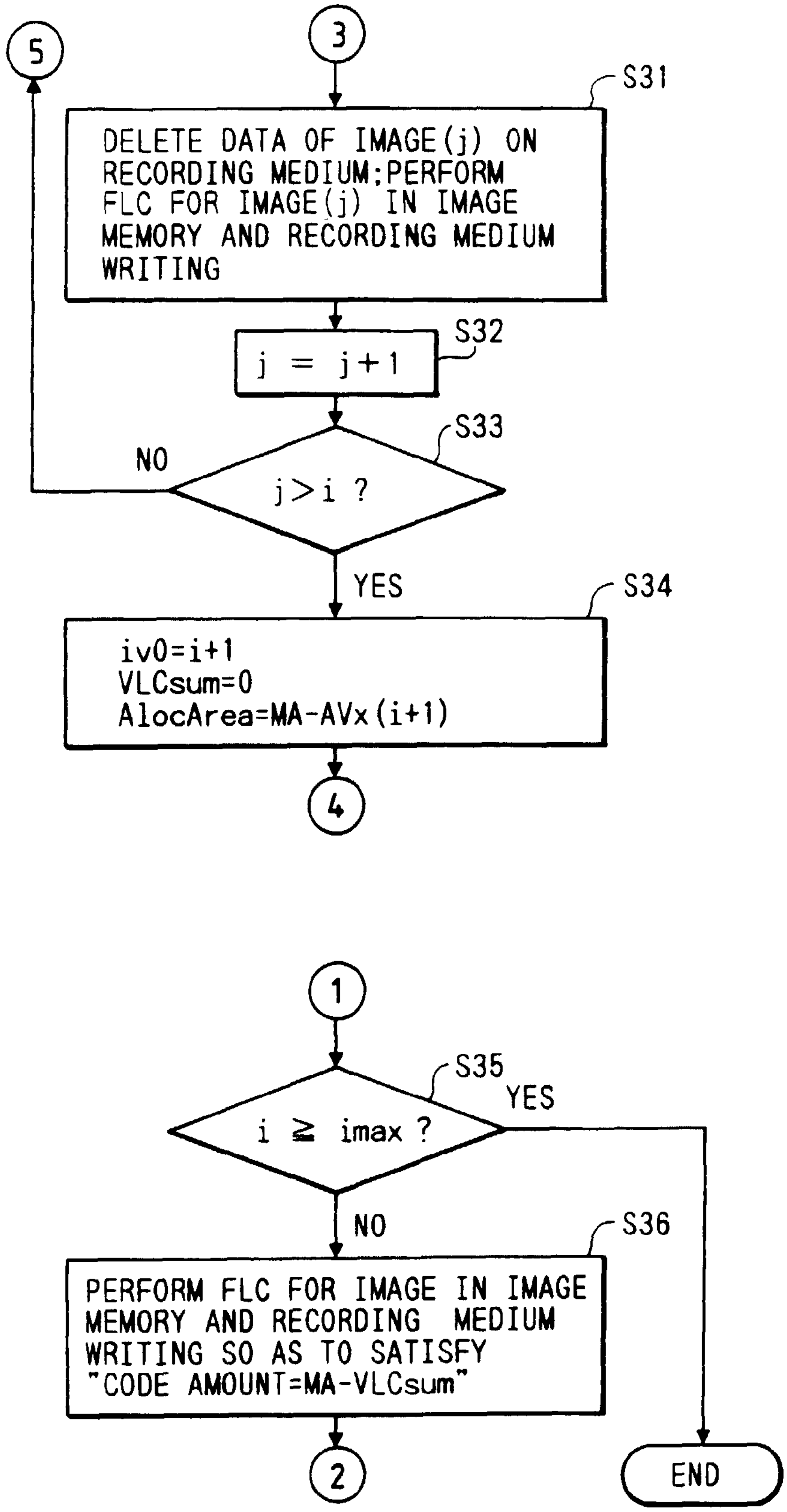

5
3
S31
DELETE DATA OF IMAGE(j) ON RECORDING MEDIUM;PERFORM FLC FOR IMAGE(j) IN IMAGE MEMORY AND RECORDING MEDIUM WRITING
S32
j = j+1
S33
NO
j>i ?
YES
S34
iv0=i+1
VLCsum=0
AlocArea=MA-AVx(i+1)
4
1
S35
YES
i ≧ imax ?
NO
S36
PERFORM FLC FOR IMAGE IN IMAGE MEMORY AND RECORDING MEDIUM WRITING SO AS TO SATISFY "CODE AMOUNT=MA-VLCsum"
2
END

FIG. 6

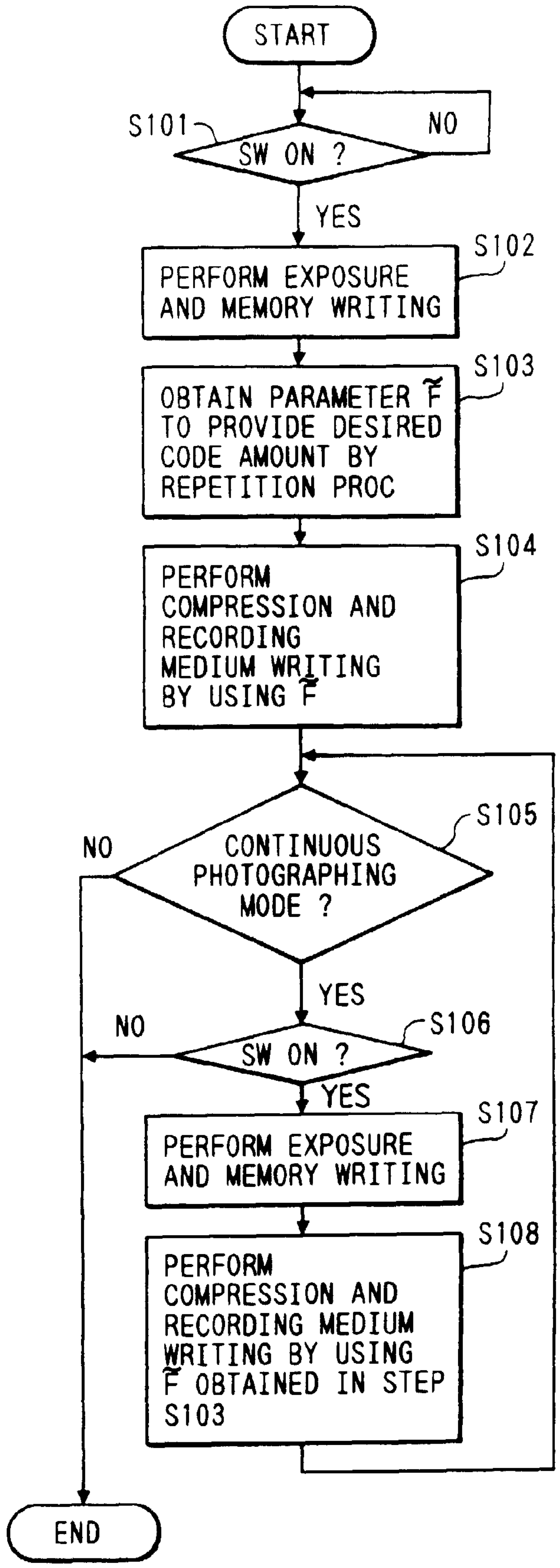
START
S101
SW ON ?
NO
YES
S102
PERFORM EXPOSURE AND MEMORY WRITING
S103
OBTAIN PARAMETER F̃ TO PROVIDE DESIRED CODE AMOUNT BY REPETITION PROC
S104
PERFORM COMPRESSION AND RECORDING MEDIUM WRITING BY USING F̃
S105
CONTINUOUS PHOTOGRAPHING MODE ?
NO
YES
S106
SW ON ?
NO
YES
S107
PERFORM EXPOSURE AND MEMORY WRITING
S108
PERFORM COMPRESSION AND RECORDING MEDIUM WRITING BY USING F̃ OBTAINED IN STEP S103
END

FIG. 7

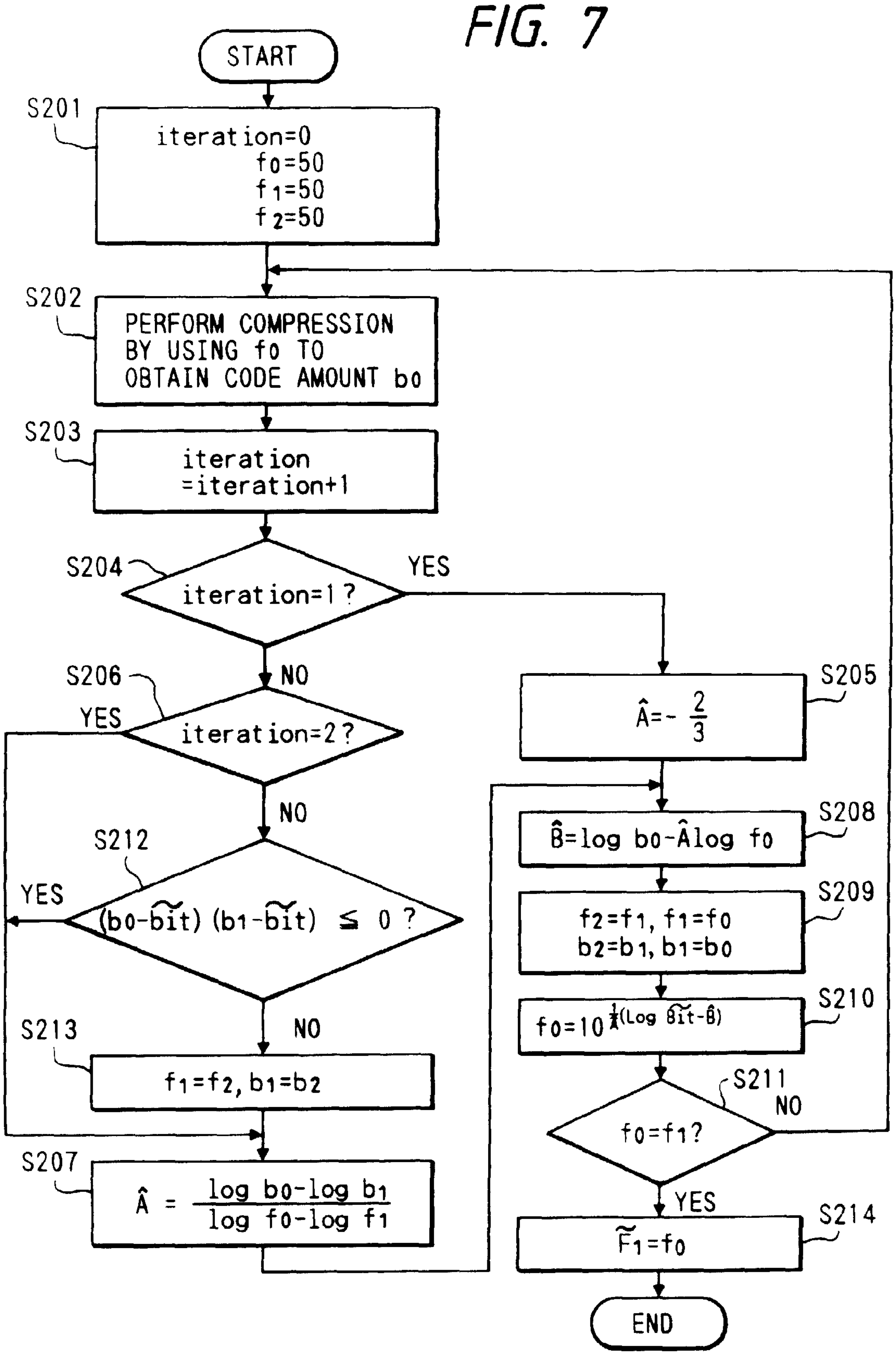
START
S201
iteration=0
f0=50
f1=50
f2=50
S202
PERFORM COMPRESSION BY USING f0 TO OBTAIN CODE AMOUNT b0
S203
iteration =iteration+1
S204
iteration=1 ?
YES
NO
S205
Â=- 2/3
S206
iteration=2 ?
YES
NO
S212
(b0-bit) (b1-bit) ≤ 0 ?
YES
NO
S213
f1=f2, b1=b2
S207
Â = (log b0-log b1)/(log f0-log f1)
S208
B̂=log b0-Âlog f0
S209
f2=f1, f1=f0
b2=b1, b1=b0
S210
f0=10^(1/Â(Log Bit-B̂))
S211
f0=f1?
NO
YES
S214
F1=f0
END

FIG. 8A

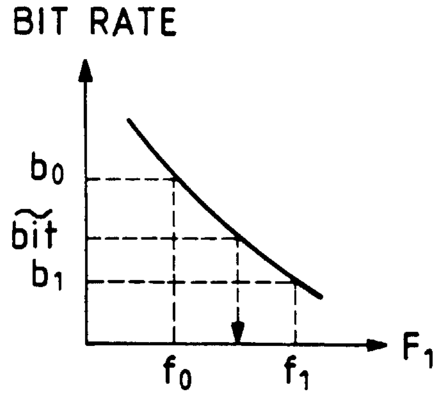


FIG. 8B

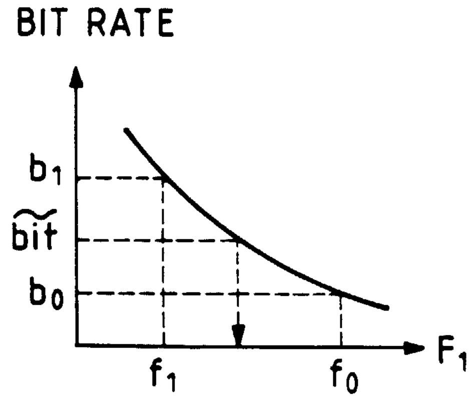


FIG. 9A

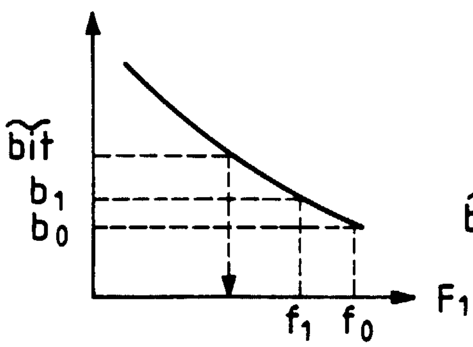


FIG. 9B

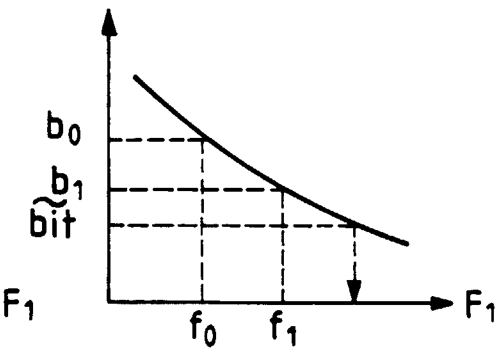


FIG. 10A

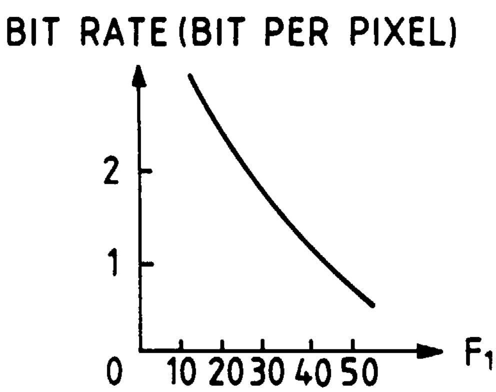


FIG. 10B

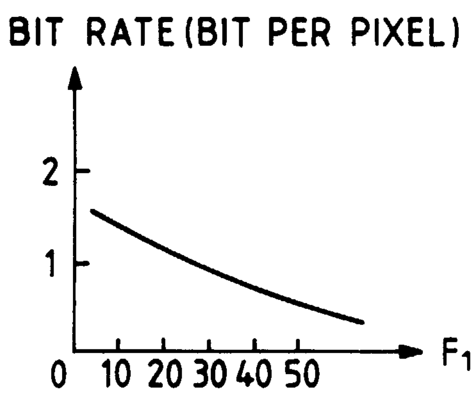

FIG. 11A

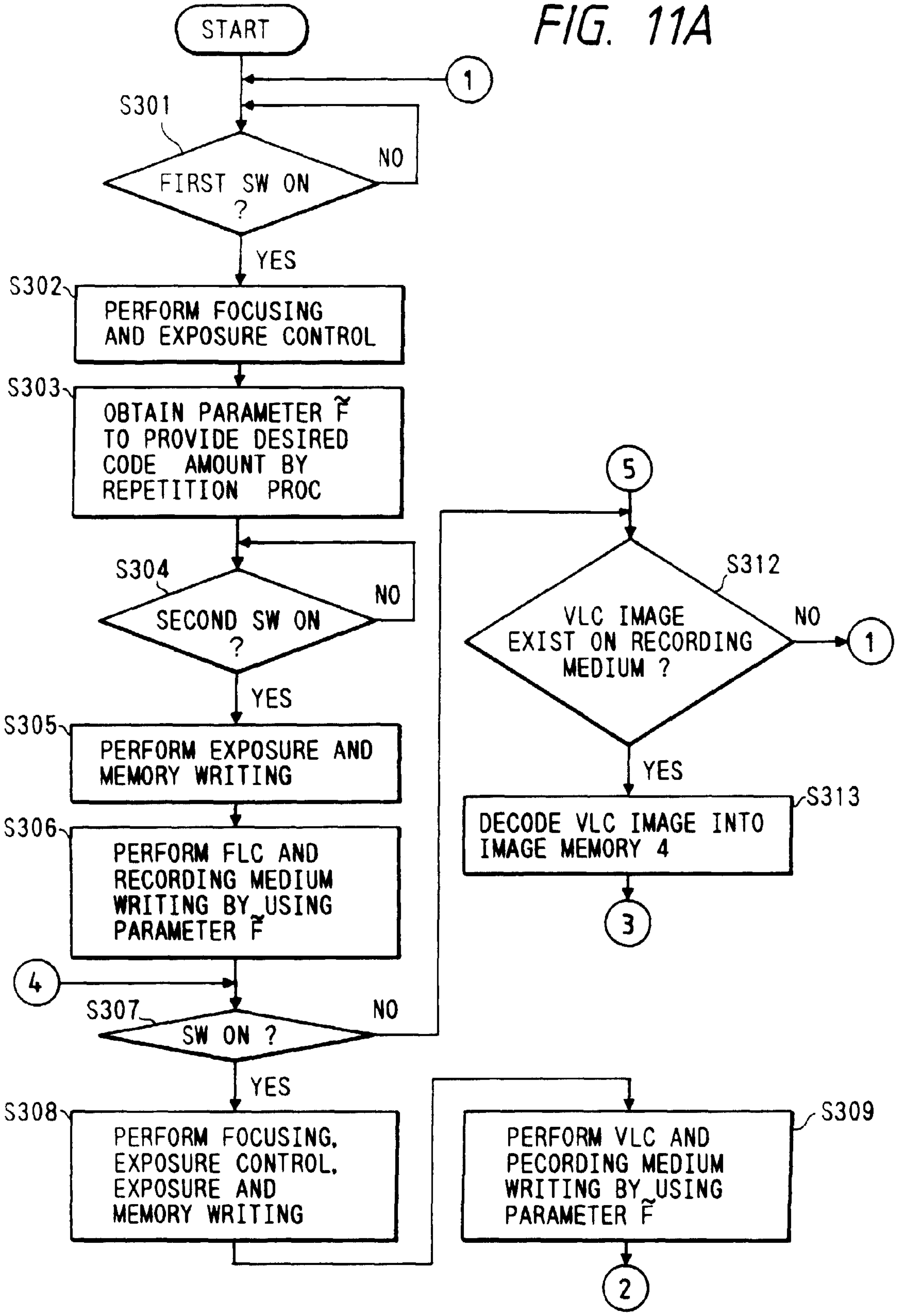
START
1
S301
FIRST SW ON ?
NO
YES
S302
PERFORM FOCUSING AND EXPOSURE CONTROL
S303
OBTAIN PARAMETER F̃ TO PROVIDE DESIRED CODE AMOUNT BY REPETITION PROC
S304
SECOND SW ON ?
NO
YES
S305
PERFORM EXPOSURE AND MEMORY WRITING
S306
PERFORM FLC AND RECORDING MEDIUM WRITING BY USING PARAMETER F̃
4
S307
SW ON ?
NO
YES
S308
PERFORM FOCUSING, EXPOSURE CONTROL, EXPOSURE AND MEMORY WRITING
5
S312
VLC IMAGE EXIST ON RECORDING MEDIUM ?
NO
1
YES
S313
DECODE VLC IMAGE INTO IMAGE MEMORY 4
3
S309
PERFORM VLC AND PECORDING MEDIUM WRITING BY USING PARAMETER F̃
2

FIG. 11B

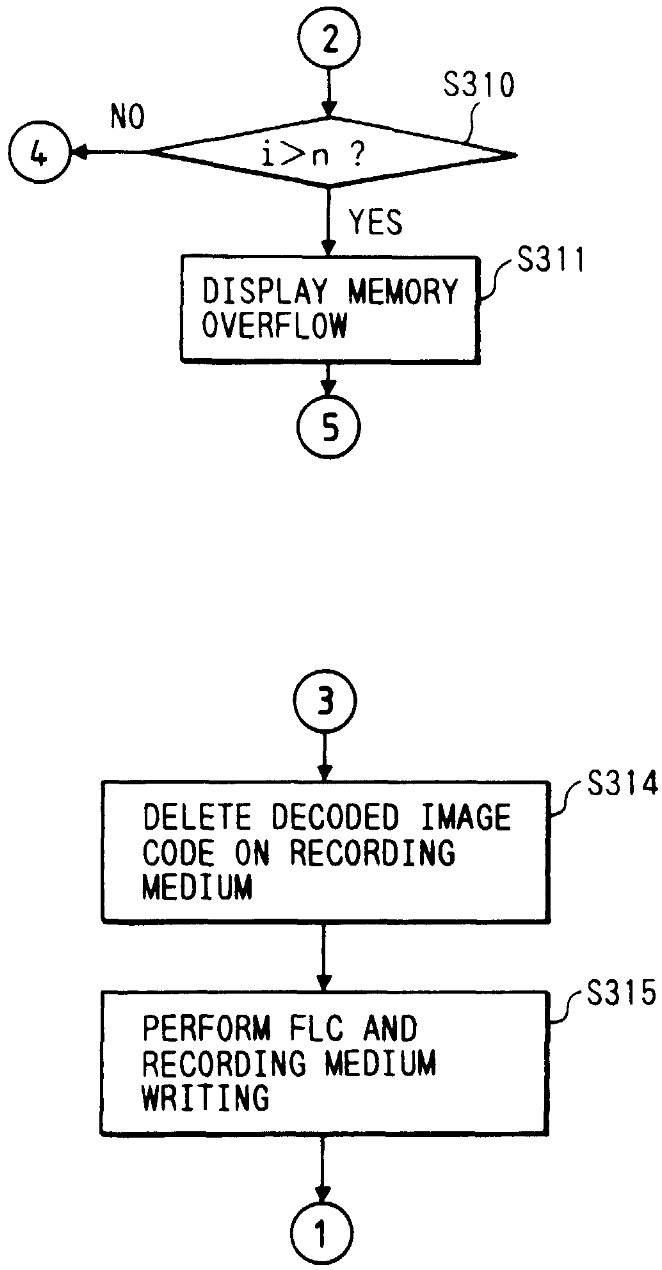
2
S310
NO
4
i>n ?
YES
S311
DISPLAY MEMORY OVERFLOW
5
3
S314
DELETE DECODED IMAGE CODE ON RECORDING MEDIUM
S315
PERFORM FLC AND RECORDING MEDIUM WRITING
1

FIG. 12

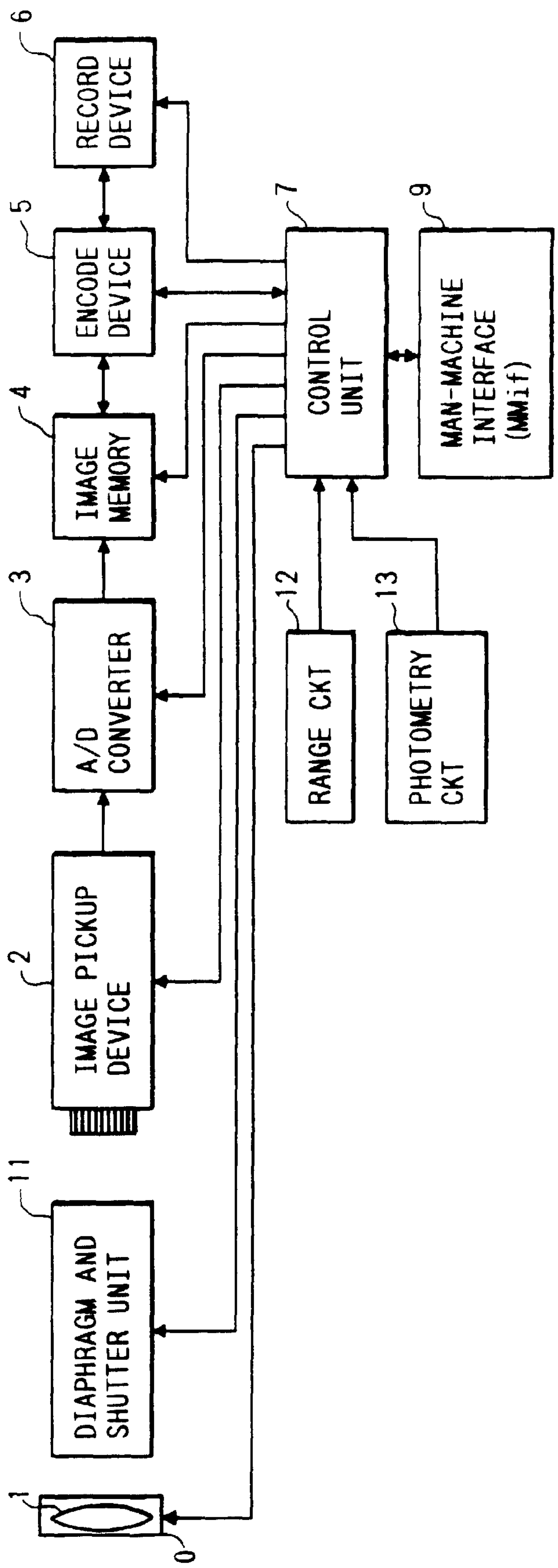
6
RECORD DEVICE
5
ENCODE DEVICE
4
IMAGE MEMORY
3
A/D CONVERTER
2
IMAGE PICKUP DEVICE
11
DIAPHRAGM AND SHUTTER UNIT
1
10
7
CONTROL UNIT
9
MAN-MACHINE INTERFACE (MMif)
12
RANGE CKT
13
PHOTOMETRY CKT